# EUROPEAN PATENT APPLICATION

(11) **EP 4 586 656 A1**
(43) Date of publication of application: **16.07.2025**
(21) Application number: 23862324.3
(22) Date of filing: 04.09.2023
(51) Int. Cl.: H04W 4/70

(54) **POSITIONING METHOD AND APPARATUS, TERMINAL, AND NETWORK SIDE DEVICE**

(30) Priority: 09.09.2022 CN 202211105835
(71) Applicant: Vivo Mobile Communication Co., Ltd., Dongguan, Guangdong 523863 (CN)
(72) Inventor: ZHANG, Hongping, Dongguan, Guangdong 523863 (CN); PAN, Xiang, Dongguan, Guangdong 523863 (CN)
(74) Representative: Shieldmark
(86) International application number: PCT/CN2023/116669
(87) International publication number: WO 2024/051630

(57) **Abstract**

This application discloses a positioning method and apparatus, a terminal, and a network-side device, and pertains to the field of communication technologies. The positioning method of embodiments of this application includes: determining, by a location server UE, to perform sidelink positioning for a target UE; obtaining, by the location server UE, information about candidate anchor UEs; determining, by the location server UE, at least one anchor UE to be used for participating in positioning from the candidate anchor UEs; and performing, by the location server UE, interaction with the target UE and/or the at least one anchor UE to position the target UE.

## Description

### CROSS-REFERENCE TO RELATED APPLICATIONS

This application claims priority to Chinese patent application No. 202211105835.4, filed on September 9, 2022, entitled "POSITIONING METHOD AND APPARATUS, TERMINAL, AND NETWORK-SIDE DEVICE", which is incorporated herein by reference in its entirety.

### TECHNICAL FIELD

This application pertains to the field of communication technologies, and specifically relates to a positioning method and apparatus, a terminal, and a network-side device.

### BACKGROUND

A long term evolution (Long Term Evolution, LTE) system supports sidelink (also translated as secondary link or side link) (sidelink) transmission, that is, data transmission between UEs (User Equipment, UE) is directly performed on a physical layer. In LTE sidelink, communication is performed based on broadcast. Although the LTE sidelink may be used to support basic security communication of vehicle to everything (vehicle to everything, V2X), the LTE sidelink is not applicable to other more advanced V2X services.

A 5G new radio (New Radio, NR) system supports more advanced sidelink transmission designs, such as unicast, multicast, or groupcast, and therefore can support more comprehensive service types. Currently, for mobile-network-based positioning technologies, the following types of positioning are supported:
a base station sends a downlink positioning reference signal (Positioning Reference Signal, PRS), and UE conducts measurements;
UE sends an uplink positioning reference signal (such as a sounding reference signal (Sounding Reference Signal, SRS)), and a base station conducts measurements; and
UE measures signals of navigation satellites.

It can be learned that the existing positioning technologies are based on reference signals of Uu interface (that is, radio interface between the UE and the base station) for positioning.

However, in addition to positioning based on the reference signals of the Uu interface, there is also a demand for positioning based on PC5 interface (that is, radio interface between UEs) in scenarios such as V2X. For example, when a vehicle is outside the coverage of a mobile network, sidelink positioning may be required. But currently, no SL positioning method based on PC5 interface has been provided.

### SUMMARY

Embodiments of this application provide a positioning method and apparatus, a terminal, and a network-side device, so as to implement SL positioning based on PC5 interface.

According to a first aspect, a positioning method is provided, where the positioning method includes:
determining, by a location server UE, to perform sidelink positioning for a target UE;
obtaining, by the location server UE, information about candidate anchor UEs;
determining, by the location server UE, at least one anchor UE to be used for participating in positioning from the candidate anchor UEs; and
performing, by the location server UE, interaction with the target UE and/or the at least one anchor UE to position the target UE.

According to a second aspect, a positioning method is provided, where the positioning method includes:
sending, by a target UE, a first message to a location server UE, where the first message is used to request information about candidate anchor UEs;
executing, by the target UE, a discovery procedure for candidate anchor UEs to obtain a first list of candidate anchor UEs; and
sending, by the target UE, a second message to the location server UE, where the second message includes the first list.

According to a third aspect, a positioning method is provided, where the positioning method includes:
performing, by a network-side device, interaction with a location server UE to provide the location server UE with information about candidate anchor UEs.

According to a fourth aspect, a positioning apparatus is provided, where the positioning apparatus includes:
a first determining module, configured to determine to perform sidelink positioning for a target UE;
a first information obtaining module, configured to obtain information about candidate anchor UEs;
a second determining module, configured to determine at least one anchor UE to be used for participating in positioning from the candidate anchor UEs; and
a location interaction module, configured to perform interaction with the target UE and/or the at least one anchor UE to position the target UE.

According to a fifth aspect, a positioning apparatus is provided, where the positioning apparatus includes:
a first receiving module, configured to receive a first message sent by a location server UE, where the first message is used to request information about candidate anchor UEs;
a first discovery module, configured to execute a discovery procedure for candidate anchor UEs to obtain a first list of candidate anchor UEs; and
a first sending module, configured to send a second message to the location server UE, where the second message includes the first list.

According to a sixth aspect, a positioning apparatus is provided, where the positioning apparatus includes:
information providing module, configured to perform interaction with a location server UE to provide the location server UE with information about candidate anchor UEs.

According to a seventh aspect, this application provides a terminal, where the terminal includes a processor and a memory, and the memory stores a program or instructions capable of running on the processor, and when the program or instructions are executed by the processor, the steps of the method according to the first aspect or the second aspect are implemented.

According to an eighth aspect, a network-side device is provided, where the network-side device includes a processor and a memory, and the memory stores a program or instructions capable of running on the processor, and when the program or instructions are executed by the processor, the steps of the method according to the third aspect are implemented.

According to a ninth aspect, a positioning system is provided, where the positioning system includes a terminal and a network-side device, the terminal is capable of being configured to execute the steps of the positioning method according to the first aspect or the second aspect, and the network-side device is capable of being configured to execute the steps of the positioning method according to the third aspect.

According to a tenth aspect, a readable storage medium is provided. The readable storage medium stores a program or an instruction, and when the program or instruction is executed by a processor, the steps of the method according to the first aspect or the steps of the method according to the second aspect or the steps of the method according to the third aspect are implemented.

According to an eleventh aspect, a chip is provided, where the chip includes a processor and a communication interface, the communication interface is coupled to the processor, and the processor is configured to run a program or instructions to implement the steps of the method according to the first aspect, or to implement the steps of the method according to the second aspect, or to implement the steps of the method according to the third aspect.

According to a twelfth aspect, a computer program/program product is provided, where the computer program/program product is stored in a storage medium, and the computer program/program product is executed by at least one processor to implement the steps of the method according to the first aspect, the second aspect, or the third aspect.

According to a thirteenth aspect, an embodiment of this application provides a positioning apparatus, where the apparatus is configured to execute the steps of the positioning method according to the first aspect, the second aspect, or the third aspect.

In the embodiments of this application, after determining to perform sidelink positioning for a target UE, a location server UE may obtain information about candidate anchor UEs to select at least one anchor UE to be used for participating in positioning from the candidate anchor UEs, and then perform interaction with the target UE and/or the at least one anchor UE to be used for participating in positioning to execute a positioning procedure of the target UE. Therefore, in the embodiments of this application, the positioning procedure of the target UE is implemented based on sidelink through information interaction among the location server UE, the target UE, and the anchor UE, that is, positioning of a certain terminal is implemented through the interaction between UEs. In other words, the embodiments of this application implement the sidelink positioning based on PC5 interface.

### BRIEF DESCRIPTION OF DRAWINGS

FIG. 1 is a block diagram of a wireless communication system to which embodiments of this application are applicable;
FIG. 2 is a schematic diagram of a positioning architecture based on Uu interface in the related art;
FIG. 3 is a schematic diagram of an overall positioning procedure based on Uu interface in the related art;
FIG. 4 is a schematic diagram of a protocol stack of long term evolution positioning protocol (long term evolution positioning protocol, LPP);
FIG. 5 is a schematic diagram of a protocol stack of a new radio positioning protocol a (new radio positioning protocol a, NRPPa);
FIG. 6 is a schematic diagram of a positioning architecture to which an embodiments of this application are applicable;
FIG. 7 is a flowchart of a positioning method according to an embodiment of this application;
FIG. 8 is a schematic diagram of a location of a new protocol layer (that is, SLPP layer) for sidelink positioning introduced according to an embodiment of this application;
FIG. 9 is a flowchart of another positioning method according to an embodiment of this application;
FIG. 10 is a flowchart of another positioning method according to an embodiment of this application;
FIG. 11 is a first flowchart of an embodiment of a positioning method according to an embodiment of this application;
FIG. 12 is a second flowchart of an embodiment of a positioning method according to an embodiment of this application;
FIG. 13 is a third flowchart of an embodiment of a positioning method according to an embodiment of this application;
FIG. 14 is a fourth flowchart of an embodiment of a positioning method according to an embodiment of this application;
FIG. 15 is a fifth flowchart of an embodiment of a positioning method according to an embodiment of this application;
FIG. 16 is a sixth flowchart of an embodiment of a positioning method according to an embodiment of this application;
FIG. 17 is a structural block diagram of a positioning apparatus according to another embodiment of this application.
FIG. 18 is a structural block diagram of another positioning apparatus according to another embodiment of this application.
FIG. 19 is a structural block diagram of another positioning apparatus according to another embodiment of this application.
FIG. 20 is a structural block diagram of a communication device according to an embodiment of this application;
FIG. 21 is a structural block diagram of a terminal according to an embodiment of this application;
FIG. 22 is a structural block diagram of a network-side device according to an embodiment of this application; and
FIG. 23 is a structural block diagram of another network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

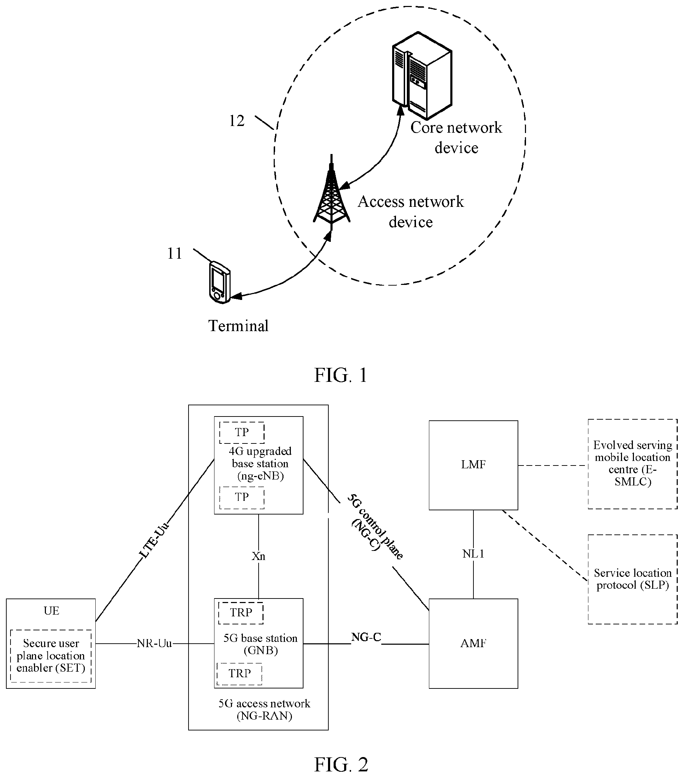

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the embodiments of this application do not impose any limitation on a specific type of the terminal 11. The network-side device 12 may include an access network device or a core network device, where the access network device 12 may also be referred to as a radio access network device, a radio access network (Radio Access Network, RAN), a radio access network function, or a radio access network unit. The access network equipment 12 may include a base station, a WLAN access point, a Wi-Fi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or other appropriate terms in the field, provided that the same technical effect is achieved. The base station is not limited to specific technical terms. It should be noted that in the embodiments of this application, the base station in the NR system is used as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

In order to facilitate understanding of the positioning method of the embodiments of this application, the following related art technologies are now introduced.

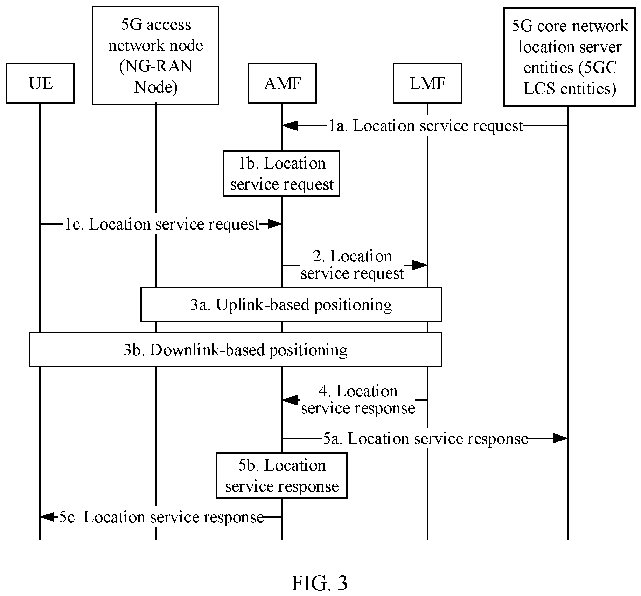

First, positioning based on Uu interface:
Based on the positioning architecture shown in FIG. 2, the overall positioning procedure may be shown in FIG. 3. To be specific, an AMF receives a location service request for a terminal from a third party, a terminal, or itself. If the terminal is in a connection management idle state (connection management-IDLE, CM-IDLE) at this time, the AMF pages the terminal to trigger the terminal to enter a connection management connected state (connection management-CONNECTED, CM-CONNECTED) (that is, the terminal corresponds to a radio resource control (Radio Resource Control, RRC) connected state at an air interface), after that the AMF sends a location service request to an LMF, and the LMF determines a positioning method based on Uu interface. The positioning method is divided into uplink-based positioning and downlink-based positioning, and then the LMF initiates a specific positioning procedure to obtain a location of the terminal.

During the positioning, the LMF may need to perform interaction with the terminal through LPP protocol and/or with a base station through NRPPa protocol, for example, interacting capabilities, interacting positioning assistance data, and interacting positioning measurement results, so that the LMF sends a location service response to the AMF, where the location service response carries the location of the terminal.

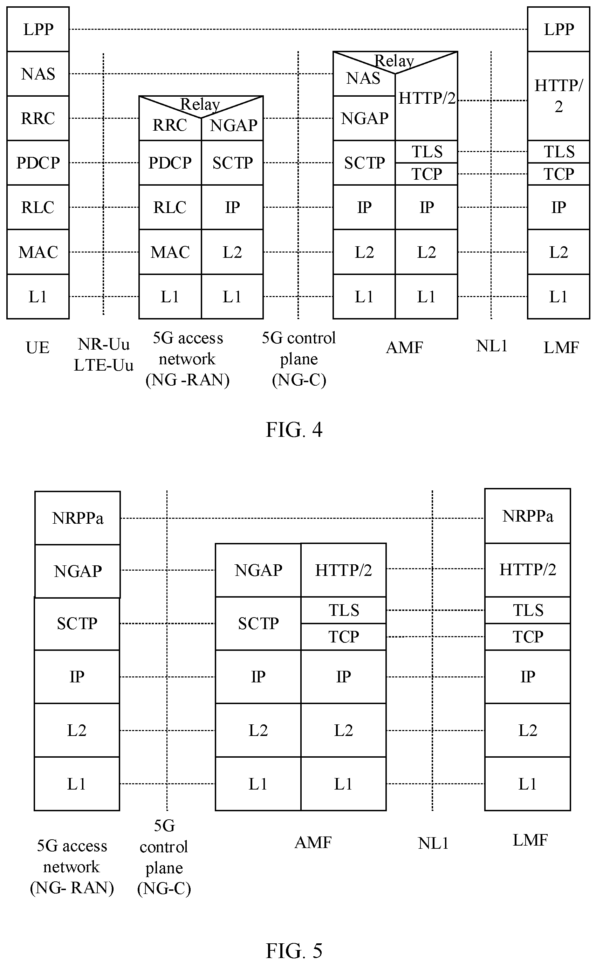

The protocol stack of LPP is shown in FIG. 4, and the protocol stack of NR positioning protocol A (NRPPa) is shown in FIG. 5. Specifically, in FIG. 4 and FIG. 5, LPP is a long term evolution positioning protocol, NAS is a non-access stratum, RRC is radio resource control, PDCP is a packet data convergence protocol, RLC is a radio link control protocol, MAC is media access control, L1 is Layer 1, L2 is Layer 2, IP is internetwork protocol, SCTP is a stream control transmission protocol, NGAP is a next generation application protocol, that is, the application layer protocol of N2 interface, TLS is a secure transport layer protocol, TCP is a transmission control protocol, HTTP is a hypertext transfer protocol, and NRPPa is an NR positioning protocol.

The following describes in detail a positioning method provided in the embodiments of this application using some embodiments and application scenarios thereof with reference to the accompanying drawings.

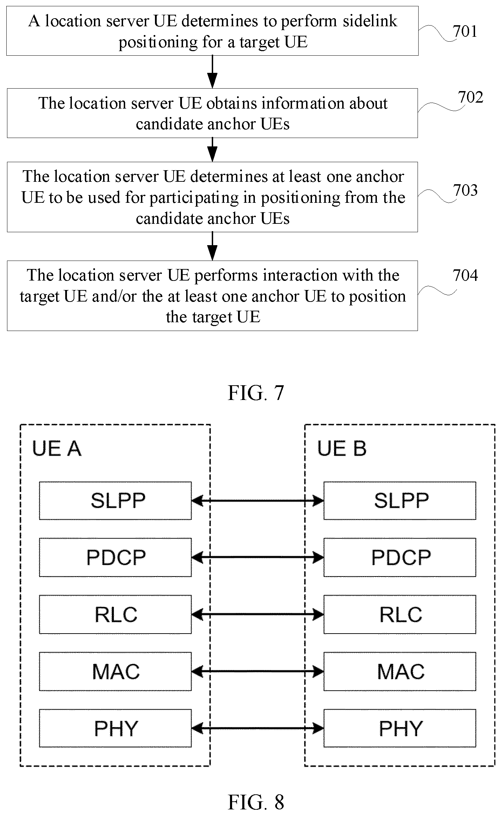

According to a first aspect, referring to FIG. 7, which is a flowchart of a positioning method according to an embodiment of this application, the method may include the following steps 701 to 704.

Step 701: A location server UE determines to perform sidelink positioning for a target UE.

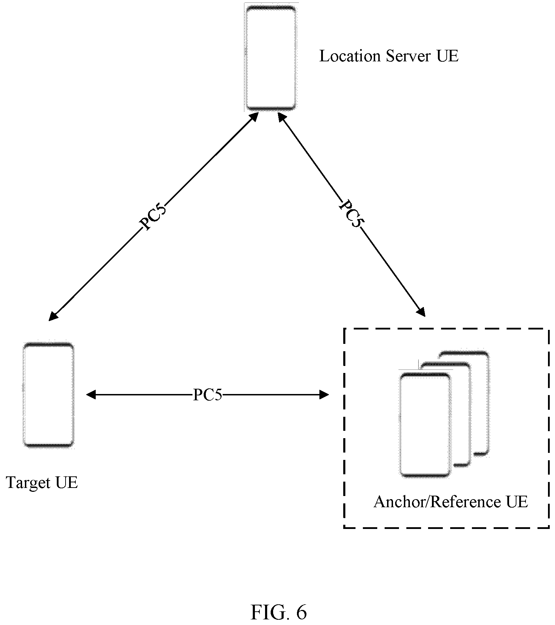

The positioning method of this embodiment of this application may be applied to a sidelink positioning architecture shown in FIG. 6.

In the positioning architecture shown in FIG. 6, the location server UE (Location Server UE) is a UE that provides location service functions. The location server UE may be considered as a mandatory role in one sidelink positioning. The location server UE receives a location request carrying location quality of service (quality of service, QoS) or triggers the sidelink positioning requirement itself, and then determines, based on the location QoS, the positioning method used in the sidelink positioning, positioning configuration information, and which UEs participate in the positioning as anchor UEs (that is, anchor UEs).

In one sidelink positioning procedure, the location server UE may be a separate role (UE), or may also assume the role of a target UE (that is, target UE). Certainly, it can also be said that the target UE concurrently takes on the role of the location server UE. In this case, the location server UE conducts self-positioning. The location server UE may also concurrently assume the role of an anchor (Anchor) UE or a reference (Reference) UE. For example, the location server UE assists in the sending or measurement of SL PRS. The reference UE is a location reference UE during relative positioning or range positioning. The reference UE may be a separate UE or may be one of anchor UEs or the location server UE.

The location request may be sent by a third-party UE or a location management function (Location Management Function, LMF) or an access and mobility management function (Access and Mobility Management Function, AMF).

In addition, in one sidelink positioning procedure, one UE may serve as a location server UE, and in another sidelink positioning procedure, this UE may not serve as a location server UE, for example, only serve as an anchor UE.

It should be noted that the location server UE plays a role in controlling the execution of sidelink positioning in one positioning procedure, and it may also be called by other names, such as controlling (controlling) UE, which is not limited herein.

In addition, the target UE (Target UE) is a target UE for positioning, where the positioning requires obtaining an absolute position, relative position, or ranging (ranging) of the UE. When the location server UE receives a request sent by another device, the target UE is UE indicated by the location request; and when the location server UE autonomously triggers a positioning requirement, the target UE is determined by the location server UE.

Step 702: The location server UE obtains information about candidate anchor UEs.

The anchor UE may be UE whose location is known (or can be known) and who participates in sending a sidelink positioning reference signal, or the anchor UE may be UE whose location is known (or can be known) and who participates in measuring a sidelink positioning reference signal.

That is, the anchor UE (that is, Anchor UE) is UE that provides positioning assistance, for example, in sending or measurement SL PRS. For absolute positioning, the anchor UE is UE with a known location or UE whose location can be known. There may be one or more anchor UEs, or there may not be a separate anchor UE, such as a location server UE that also concurrently assumes the role of an anchor UE. The anchor UE may also be called a located (located) UE. Usually, a roadside unit (RoadSide Unit, RSU) may be used as an anchor UE.

It should be noted that, since the location server UE may also serve as the anchor UE, in the architecture shown in FIG. 6, in some scenarios, there may not be a separate anchor UE and/or a separate reference UE. In addition, the location server UE and the target UE may be the same UE or different UEs.

Step 703: The location server UE determines at least one anchor UE to be used for participating in positioning from the candidate anchor UEs.

The location server UE may use each candidate anchor UE as the anchor UE to be used for participating in positioning; or may determine a sidelink positioning method based on the location QoS, and select a UE that supports the positioning method from these candidate anchor UEs as the anchor UE to be used for participating in positioning; or may select, after sorting according to sizes of RSRPs, a UE with a high RSRP (for example, greater than a certain threshold) as the anchor UE to be used for participating in positioning; or may select a candidate anchor UE that can establish a sidelink unicast connection with the location server UE from these candidate anchor UEs as the anchor UE to be used for participating in positioning.

Step 704: The location server UE performs interaction with the target UE and/or the at least one anchor UE to position the target UE.

The process of step 704 may include:
the location server UE performs interaction with the anchor UE to be used for participating in positioning and configures the anchor UE to send SL PRS;
the location server UE performs interaction with the target UE and configures the target UE to measure SL PRS;
the location server UE receives a positioning measurement result sent by the target UE; and
the location server UE determines location information of the target UE based on the positioning measurement result.

Alternatively, step 704 may include:
the location server UE performs interaction with the target UE and configures the target UE to send SL PRS;
the location server UE performs interaction with the anchor UE to be used for participating in positioning and configures the anchor UE to measure SL PRS;
the location server UE receives a positioning measurement result sent by the anchor UE; and
the location server UE determines location information of the target UE based on the positioning measurement result.

In addition, if the location server UE executes the aforementioned steps 701 to 704 after receiving a location request sent by another device, after obtaining the location information of the target UE, the location server UE may also return the location information of the target UE to the device that has sent the above location request, for example, carrying the location information of the target UE in a location response and returning the location response to the device that has sent the location request.

It can be learned from the above steps 701 to 704 that in this embodiment of this application, after determining to perform sidelink positioning for the target UE, the location server UE may obtain information about candidate anchor UEs to select at least one anchor UE to be used for participating in positioning from the candidate anchor UEs, and then perform interaction with the target UE and/or the at least one anchor UE to be used for participating in positioning to execute a positioning procedure of the target UE. Therefore, in this embodiment of this application, the positioning procedure of the target UE is implemented based on sidelink through information interaction among the location server UE, the target UE, and the anchor UE, that is, positioning of a certain terminal is implemented through the interaction between UEs. In other words, this embodiment of this application implements the sidelink positioning based on PC5 interface.

Optionally, the foregoing step 702 "the location server UE obtains information about candidate anchor UEs" includes:
the location server UE obtains the information about the candidate anchor UEs from the target UE; or
the location server UE performs interaction with a network-side device to obtain the information about the candidate anchor UEs.

It can be learned that the location server UE may obtain the information about the candidate anchor UEs from the target UE, and may also obtain the information about the candidate anchor UEs from the network-side device, where the network-side device may be a core network device (for example, AMF and LMF) or an access network device (for example, base station).

The following will specifically introduce the process of the location server UE obtaining the information about the candidate anchor UEs from the target UE or the network-side device.

Case 1: The location server UE obtains the information about the candidate anchor UEs from the target UE, which may be specifically the following way 1-1 or way 1-2.

Way 1-1: Optionally, the location server UE obtains the information about the candidate anchor UEs from the target UE includes:
the location server UE sends a first message to the target UE, where the first message is used to request to obtain the information about the candidate anchor UEs;
the location server UE receives a second message sent by the target UE in response to the first message, where the second message includes a first list of the candidate anchor UEs; and
the location server UE obtains the information about the candidate anchor UEs based on the first list in the second message.

It can be learned from this that the location server UE may send the foregoing first message to the target UE to request the information about the candidate anchor UEs. In this way, after receiving the first message, the target UE may trigger the process of obtaining the candidate anchor UEs, so as to carry the obtained first list of candidate anchor UEs in the second message and returning the second message to the location server UE.

The first message may be one of an SLPP message, an LPP message, and a PC5 RRC message.

Optionally, the method further includes:
step H1: in a case that a sidelink unicast connection has not been established between the location server UE and the target UE, the location server UE executes a discovery procedure for the target UE and/or a sidelink unicast connection establishment procedure with the target UE;
that the location server UE sends a first message to the target UE includes:
   in a case that a sidelink unicast connection has been successfully established between the location server UE and the target UE, the location server UE sends the first message to the target UE through the sidelink unicast connection between the location server UE and the target UE; and
   that the location server UE receives a second message sent by the target UE in response to the first message includes:
in a case that a sidelink unicast connection has been successfully established between the location server UE and the target UE, the location server UE receives the second message through the sidelink unicast connection between the location server UE and the target UE.

Optionally, the method further includes:
Step H2: in a case that the target UE is not successfully discovered and/or the sidelink unicast connection has not been successfully established between the location server UE and the target UE, the location server UE sends a location response message or a positioning failure message to a device that has sent a location request, where the location response message or the positioning failure message carries first indication information, and the first indication information is used to indicate that the target UE is not successfully discovered and/or the sidelink unicast connection is not successfully established between the location server UE and the target UE.

It can be learned from the foregoing steps H1 to H2 that in an embodiment of this application, if the location server UE does not establish a sidelink unicast connection with the target UE (for example, in a scenario in which a third-party UE or a location management function (Location Management Function, LMF) or an access and mobility management function (Access and Mobility Management Function, AMF) initiates a request for positioning the target UE), the location server UE executes a discovery procedure for the target UE and/or a sidelink unicast connection establishment procedure with the target UE.

If the location server UE does not discover the target UE or fails to successfully establish a sidelink unicast connection with the target UE, the location server UE replies with a location response message or a positioning failure message to the device that has sent the location request, so as to end the process. The location response message or the positioning failure message may include a failure reason (that is, the first indication information mentioned above), and the failure reason may be one of failure to execute, failure to discover the target UE, and failure to establish a unicast connection.

Optionally, the first message includes a target condition that the candidate anchor UEs need to meet, and the candidate anchor UEs in the first list meet the target condition.

The target condition includes at least one of the following items A-1 to A-12:
item A-1: having known location information;
item A-2: being capable of obtaining location information;
item A-3: being in a specific mobility state;
item A-4: having a reference signal received power RSRP measurement result greater than a first preset threshold;
item A-5: belonging to a specific UE type;
item A-6: possessing a specific sidelink positioning capability;
item A-7: being within a network coverage area;
item A-8: being within a specific area;
item A-9: being in a specific radio resource control RRC state;
item A-10: having a PC5 port resource greater than a second preset threshold;
item A-11: having established a sidelink unicast connection with the target UE; and
item A-12: being in a specified UE list.

For the above items A-1 and A-2, for example, when the absolute position of the target UE needs to be obtained, the anchor UE to be used for participating in positioning should be a UE with a known position or a UE whose location can be known. In this case, the above target condition includes the foregoing item A-1 (that is, having known location information) or item A-2 (being capable of obtaining location information);
The "specific mobility state" in the foregoing item A-3 may be, for example, a stationary state.

The RSRP measurement result in the foregoing item A-4 may be RSRP of a radio signal of the anchor UE measured by the target UE, or may be RSRP of a radio signal of the target UE measured by the anchor UE.

For the foregoing item A-5, the specific UE type may be a roadside unit (RoadSide Unit, RSU) or a positioning reference unit (Positioning Reference Unit, PRU).

For the foregoing item A-6, the specific sidelink positioning capability may include at least one of supporting a certain sidelink positioning method, supporting a certain sidelink measurement quantity, supporting sending SL-PRS, and supporting measuring SL-PRS.

The "specific area" in the foregoing item A-8 may be the coverage area of a cell or a cell in the cell list.

The "specified RRC state" in the foregoing item A-9 includes, for example, at least one of an RRC connected state and an RRC idle state.

For the foregoing item A-12, a UE list may be included in the first request message. For example, UEs in the UE list may be fixed-position roadside units (Road Side Unit, RSU), and thus the UEs in the candidate anchor UE list provided by the target UE need to be in the UE list.

In addition, the target UE may adopt the following way 1-1.1 or way 1-1.2 or way 1-1.3 to obtain candidate anchor UEs that meet the target condition.

Way 1-1.1: The target UE broadcasts a discovery request message. After receiving the discovery request message, one or more UEs reply with a first response message to the target UE. The target UE then selects UEs that meet the target condition from the UEs corresponding to the received first response message as the candidate anchor UEs.

Way 1-1.2: The target UE receives an announcement message broadcast by one or more UEs, where the announcement messages include parameter information of the UE(s). In this way, the target UE may select UEs that meets the target condition from the UE(s) that send the announcement message as the candidate anchor UEs based on the parameter information in the announcement message.

Way 1-1.3: The target UE broadcasts a discovery request message, where the discovery request message carries the foregoing target condition. Among the UEs that receive the discovery request message, UEs that meet the target condition each reply with a first response message to the target UE, and the target UE uses the UEs corresponding to the received first response message as candidate anchor UEs.

Way 1-2: Optionally, that a location server UE determines to perform sidelink positioning for a target UE includes:
the location server UE receives a location request, where the location request is used to request positioning of the target UE; and
the location server UE determines, in response to the location request, to perform sidelink positioning for the target UE.

Optionally, the location request is sent by the target UE, and the location request includes a first list of the candidate anchor UEs; and
that the location server UE obtains the information about the candidate anchor UEs from the target UE includes:
the location server UE obtains the information about the candidate anchor UEs based on the first list in the location request.

It can be learned from this that if the location request received by the location server UE is sent by the target UE, the location request may carry the candidate anchor UEs obtained by the target UE. To be specific, in a case that the location request comes from the target UE, the target UE has performed the discovery procedure for anchor UEs in the recent period of time and obtained information related to the candidate anchor UEs, where this information is still valid. Thus, the information about the candidate anchor UEs may be carried in the location request, thereby reducing the positioning delay.

Optionally, the second message or the location request further includes first UE information of the candidate anchor UEs, where the first UE information includes at least one of the following item B-1 to item B-13:
item B-1: UE identifier;
item B-2: UE index;
item B-3: RRC state;
item B-4: identification information of a serving cell;
item B-5: registered access and mobility management function AMF information;
item B-6: sidelink positioning capability information;
item B-7: sidelink positioning reference signal PRS transmitting configuration information;
item B-8: sidelink resource configuration;
item B-9: sidelink resource allocation mode;
item B-10: resource scheduling type when the sidelink resource allocation mode is mode1;
item B-11: geographical location information;
item B-12: associated RSRP measurement result; and
item B-13: mobility state.

For the foregoing item B-1, the UE identifier may include, for example, at least one of temporary UE identifier (for example, SAE-Temporary Mobile Subscription Identifier, S-TMSI), international mobile subscriber identity (International Mobile Subscriber Identity, IMSI), subscription permanent identifier (Subscription Permanent Identifier, SUPI), cell-radio network temporary identifier (Cell-Radio Network Temporary Identifier, C-RNTI), sidelink layer 2 identifier (SL layer2 ID), and application layer (Application Layer) UE ID.

For the UE index in the foregoing item B-2, each candidate anchor UE is assigned a UE index to facilitate subsequent interaction.

The RRC state in the foregoing item B-3 may include at least one of an RRC connected state, an RRC idle state, and an RRC deactivated state.

For the foregoing item B-4, the identification information of the serving cell may include at least one of a frequency, physical cell identifier (Physical Cell Identifier, PCI), and cell global identifier (Cell Global Identifier, CGI) of the serving cell.

For the foregoing item B-5, the registered AMF information may include at least one of a currently serving public land mobile network (Public Land Mobile Network, PLMN) ID and an AMF ID of the registered AMF.

For the foregoing item B-6, the sidelink positioning capability information may include at least one of: whether to support sending a sidelink positioning reference signal (Sidelink Positioning Reference Signals, SL-PRS), whether to support measuring SL-PRS, a supported sidelink positioning method, and whether to provide its own location.

For the "sidelink PRS transmitting configuration information" in the foregoing item B-7, the anchor UE sends SL PRS on resources indicated by the configuration information.

For the foregoing item B-8, the sidelink resource configuration includes at least one of currently used sidelink resources and sidelink resources configured by a base station.

The foregoing item B-9 is used to indicate whether the sidelink resource allocation mode of the terminal is mode1 (mode1) or mode2 (mode2).

NR V2X defines two resource allocation modes (mode), one is mode1, to be specific, the base station schedules resources; and the other is mode2, to be specific, the UE decides what resources to use for transmission, and the resource information may come from a broadcast message of the base station or pre-configured information. If the UE works within the coverage area of the base station and has an RRC connection with the base station, the resource allocation mode may be mode1 and/or mode2; if the UE works within the coverage area of the base station but does not have an RRC connection with the base station, the resource allocation mode can only be mode2; and if the UE is outside the coverage area of the base station, the resource allocation mode can only be mode2, for example, V2X transmission is performed according to pre-configured information.

For the foregoing item B-10, the resource scheduling type used to indicate the sidelink resource allocation mode of the terminal being mode1 is specifically one of the following types:
dynamic scheduling (dynamic scheduling), to be specific, resources are dynamically scheduled by the base station;
configured grant type 1 (configured grant type 1), to be specific, periodic resources configured by the base station can be used directly; and
configured grant type 2 (configured grant type 2), to be specific, periodic resources configured by the base station can be used only after the periodic resources are activated).

The "geographical location information" in the foregoing item B-11 may be, for example, latitude and longitude information.

The "associated RSRP measurement result" in the foregoing item B-12 means RSRP associated with the candidate anchor UEs, where the RSRP associated with the candidate anchor UEs may include: RSRP of a radio signal of the candidate anchor UEs measured by the target UE, or may be RSRP of a radio signal of the target UE measured by the candidate anchor UEs.

When the location server UE obtains the candidate anchor UEs from the target UE, the candidate anchor UEs are identified by the target UE in performing the discovery procedure, in other words, the candidate anchor UEs are in the vicinity of the target UE, and anchor UEs to be used for participating in positioning finally selected by the location server UE are in the vicinity of the target UE. This may cause a problem: the location server UE may be too far away from some of the anchor UEs to be used for participating in positioning, resulting in the location server UE being unable to establish a sidelink unicast connection with these anchor UEs for communication.

In order to solve the preceding problem, the following method 1, method 2 or method 3 may be used to solve it.

Method 1: Optionally, the method further includes:
the location server UE executes a discovery procedure and/or a sidelink unicast connection establishment procedure for each UE in the first list; and
that the location server UE determines at least one anchor UE to be used for participating in positioning from the candidate anchor UEs includes:
   the location server UE determines the at least one anchor UE to be used for participating in positioning from a first category of UEs in the first list, where the first category of UEs are UEs for which the location server UE has successfully performed discovery and/or established a sidelink unicast connection.

It can be learned that after receiving the second message sent by the target UE, the location server UE may perform a discovery procedure for the candidate anchor UEs (that is, the candidate anchor UEs in the first list) carried in the second message, or (if the location server UE has not established a sidelink unicast connection with the candidate anchor UEs) try to establish a sidelink unicast connection with these candidate anchor UEs. In this way, when selecting an anchor UE to be used for participating in positioning, the anchor UE to be used for participating in positioning is selected from the candidate anchor UEs that can successfully discover or successfully establish a sidelink unicast connection.

Method 2: Optionally, before the location server UE sends a first message to the target UE, the method further includes:
the location server UE executes a discovery procedure for candidate anchor UEs to obtain a second list of candidate anchor UEs; where
the candidate anchor UEs included in the second list are UEs successfully discovered by the location server UE, the first message includes the second list, and the candidate anchor UEs included in the first list are UEs successfully discovered by the target UE in the second list.

It can be learned from this that the location server UE may first perform the discovery procedure for the candidate anchor UEs before sending the first message to the target UE, and obtain the second list of candidate anchor UEs, so as to carry the second list in the first message and send the first message to the target UE. In this way, after receiving the second message, the target UE may further perform the discovery procedure to identify the candidate anchor UEs in UEs in the second list, so as to put a list of candidate anchor UEs (that is, the first list) obtained at this point in the second message and send the second message to the location server UE, that is, the candidate anchor UEs included in the second message are UEs that can be discovered by both the target UE and the location server UE.

Method 3: Optionally, that the location server UE performs interaction with the anchor UE includes:
the location server UE performs interaction with the anchor UE through the target UE; or
in a case that the location server UE has successfully established a sidelink unicast connection with the anchor UE, the location server UE performs interaction with the anchor UE through the sidelink unicast connection between the location server UE and the anchor UE.

It can be learned from this that when there are multiple anchor UEs to be used for participating in positioning, the information interacted between the location server UE and each of the anchor UEs to be used for participating in positioning may be forwarded through the target UE.

Alternatively, the information interacted between the location server UE and some of anchor UEs to be used for participating in positioning is forwarded through the target UE, and the communication between the other of the anchor UEs to be used for participating in positioning and the location server UE is implemented through establishment of a sidelink unicast connection. For example, after selecting the anchor UEs to be used for participating in positioning, the location server UE may first attempt to discover each of the anchor UEs to be used for participating in positioning or establish a sidelink unicast connection with each of the anchor UEs to be used for participating in positioning. For anchor UEs that fail to be discovered or fail to establish a unicast connection, the information is forwarded through the target UE, otherwise the interaction is directly performed through the sidelink unicast connection.

The information interacted between the location server UE and the anchor UE is forwarded through the target UE, which can solve the problem of "the location server UE may be too far away from some of the anchor UEs to be used for participating in positioning, resulting in the location server UE being unable to establish a sidelink unicast connection with these anchor UEs for communication".

Optionally, that the location server UE performs interaction with the anchor UE through the target UE includes at least one of the following:
the location server UE sends a third message to the target UE, where the third message includes identification information or index of the anchor UE and a first container, and the first container includes a fourth message sent by the location server UE to the anchor UE; and
the location server UE receives a sixth message sent by the target UE, where the sixth message includes identification information or index of the anchor UE and a second container, and the second container includes a fifth message sent by the anchor UE to the location server UE.

It can be learned from this that when the location server UE needs to send the fourth message to the anchor UE, the location server UE first sends the third message carrying the fourth message to the target UE, so that the target UE sends a ninth message to the anchor UE, where the ninth message includes a third container, and the third container includes the fourth message. To be specific, the target UE adds the fourth message that the location server UE needs to send to the anchor UE in the ninth message and sends the ninth message to the anchor UE. Herein, the third message is one of the following: an SLPP message, a PC5 RRC message, and a PC5 signaling (that is, PC5-S) message; and the ninth message is one of the following: an SLPP message, a PC5 RRC message, and a PC5 signaling (that is, PC5-S) message.

In addition, when the anchor UE needs to send a fifth message to the location server UE, the anchor UE first sends a tenth message to the target location UE, where the tenth message includes a fourth container, and the fourth container includes the fifth message that the anchor UE needs to send to the location server UE, so that the target UE sends a sixth message carrying the fifth message to the location server UE. Herein, the tenth message is one of the following: an SLPP message, a PC5 RRC message, and a PC5 signaling (that is, PC5-S) message.

In addition, during the process of the location server UE performing interaction with the anchor UE through the target UE, the target UE is configured to forward messages. In a case that the message received by the target UE includes a container, the target UE may not decode the container.

It should be noted that the SLPP message may be a message of a newly introduced sidelink positioning protocol or a message of an LPP protocol.

The newly introduced SLPP protocol layer is used for sidelink positioning. This protocol layer is used for the location server UE to perform positioning message interaction with the target UE and anchor UEs. For example, as shown in FIG. 8, the SLPP layer is a newly introduced protocol layer for sidelink positioning, which is located on the upper layer of the PDCP layer. It can be understood that SLPP may alternatively be located on the upper layer of PC5 RRC or PC5-S. PHY in FIG. 8 represents a physical layer.

Optionally, the third message may include a message sent to one or more anchor UEs.

Optionally, for each anchor UE, the third message may include one or more messages sent to the anchor UE so as to reduce positioning delay and signaling overhead.

It should be noted that the target UE may determine a corresponding anchor UE according to the identifier or index of the anchor UE in the third message. If no sidelink unicast connection is established between the target UE and the anchor UE, the target UE establishes a sidelink unicast connection with the anchor UE; if the unicast connection establishment fails, the target UE may also send a failure message to the location server UE, where the failure message may carry a cause value to indicate a delivery failure or a failure to establish a unicast connection. The anchor UE that fails to establish a sidelink unicast connection with the target UE cannot participate in the positioning procedure.

Case 2: The location server UE obtains the information about the candidate anchor UEs from a network-side device, which may be specifically the following way 2-1 or way 2-2.

Way 2-1: Optionally, that the location server UE performs interaction with a network-side device to obtain the information about the candidate anchor UEs includes:
the location server UE sends a first request message to the network-side device, where the first request message is used to request to obtain the information about the candidate anchor UEs;
the location server UE receives a seventh message sent by the network-side device in response to the first request message, where the seventh message includes a third list of the candidate anchor UEs; and
the location server UE obtains the information about the candidate anchor UEs based on the third list in the seventh message.

It can be learned from this that the location server UE may send the foregoing first request message to the network-side device to request the information about the candidate anchor UEs. In this way, after receiving the first request message, the network-side device may carry the third list of candidate anchor UEs in the seventh message and returning the seventh message to the location server UE.

Herein, the network-side device may be, for example, an LMF or an AMF or a base station. To be specific, the LMF or the AMF or the base station may store the information about candidate anchor UEs, such as information obtained through an operation administration and maintenance (Operation Administration and Maintenance. OAM) system. After receiving the foregoing first request message sent by the location server UE, the LMF or the AMF or the base station may obtain the third list of candidate anchor UEs according to the information about the candidate anchor UEs stored therein, and then carry the third list in the seventh message and return the seventh message to the location server UE.

Optionally, the network-side device is a location management function LMF, and the first request message is a location service LCS message or a long term evolution positioning protocol LPP message; or
the network-side device is an access mobility management function AMF, and the first request message is a non-access stratum NAS message.

Optionally, the seventh message is one of an LPP message, an LCS message, a NAS message, and a dedicated RRC message.

Optionally, the first request message includes location information of the location server UE, and the candidate anchor UEs in the third list are determined based on the location information of the location server UE.

The location information of the location server UE may be latitude and longitude information, or may be an ID of a current serving cell corresponding to the location server UE.

It can be learned from this that when the location server UE sends the first request message to the network-side device to request the information about the candidate anchor UEs, it can also carry its own location information in the first request message and send the first request message to the network-side device. In this way, the network-side device may determine the candidate anchor UEs based on the location information of the location server UE (for example, select the candidate anchor UEs within a certain distance range from the location server UE, or the candidate anchor UEs in the same serving cell as the location server UE and in a neighboring serving cell of the cell corresponding to the location server UE), so as to reduce unnecessary signaling overhead, and thus carry the third list of candidate anchor UEs determined based on the location information of the location server UE in the seventh message and send the seventh message to the location server UE.

Way 2-2: Optionally, that the location server UE performs interaction with a network-side device to obtain the information about the candidate anchor UEs includes:
the location server UE receives a system information message sent by the network-side device, where the system information message includes a third list of the candidate anchor UEs; and
the location server UE obtains the information about the candidate anchor UEs based on the third list in the system information message.

Herein, the network-side device may be, for example, a base station. To be specific, the base station may broadcast the third list of candidate anchor UEs in a system message of a cell, so that the location server UE may receive the system message.

In addition, the system information message may be a positioning system information block (positioning System Information Block posSIB) or may be a conventional system information block (System Information Block, SIB) message.

Optionally, the information about the anchor UEs included in the system information message is encrypted information; and
that the location server UE obtains the information about the candidate anchor UEs based on the third list in the system information message includes:
in a case that a predetermined key is stored in the location server UE, the location server UE decrypts, using the predetermined key, the encrypted information in the system information message to obtain the third list; and
the location server UE obtains the information about the candidate anchor UEs based on the third list.

It can be learned that in this embodiment of this application, the information about the candidate anchor UEs carried in the system information message (for example, the third list) may be encrypted so that only the location server UE with the corresponding key (for example, an authenticated location server UE) can correctly decrypt it.

Optionally, the seventh message or the system information message further includes second UE information of the candidate anchor UEs, where the second UE information includes at least one of the following:
item C-1: UE identifier;
item C-2: geographical location information;
item C-3: sidelink positioning capability information;
item C-4: identification information of a serving cell; and
item C-5: sidelink PRS transmitting configuration information.

For the above-mentioned item C-1, the UE identifier may include, for example, at least one of S-TMSI, IMSI, SUPI, C-RNTI, SL layer2 ID, and application layer UE ID.

The "geographical location information" in the foregoing item C-2 may be, for example, latitude and longitude information.

For the foregoing item C-3, the sidelink positioning capability information may include at least one of: whether to support sending SL-PRS, whether to support measuring SL-PRS, a supported sidelink positioning method, and whether to provide its own location.

For the foregoing item C-4, the identification information of the serving cell may include at least one of a frequency, PCI, and CGI of the serving cell.

For the "sidelink PRS transmitting configuration information" in the foregoing item C-5, the anchor UE sends SL PRS on resources indicated by the configuration information.

Optionally, the third list includes at least one UE of the following:
candidate anchor UEs in a serving cell corresponding to the location server UE; and
candidate anchor UEs in a neighboring cell of a serving cell corresponding to the location server UE.

It can be learned from this that the third list fed back by the network-side device (for example, LMF or AMF or base station) to the location server UE may include anchor UEs in the current serving cell corresponding to the location server UE, or may include anchor UEs in the current serving cell and neighboring cell of the serving cell corresponding to the location server UE.

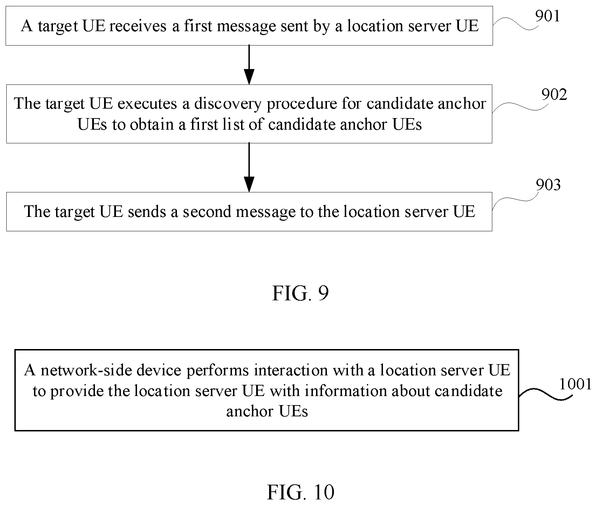

According to a second aspect, referring to FIG. 9, which is a flowchart of a positioning method according to an embodiment of this application, the method may include the following steps 901 to 903.

Step 901: A target UE receives a first message sent by a location server UE.

The first message is used to request information about candidate anchor UEs. The first message may be one of an SLPP message, an LPP message, and a PC5 RRC message.

The positioning method of this embodiment of this application may be applied to a sidelink positioning architecture shown in FIG. 6.

In the positioning architecture shown in FIG. 6, the location server UE (Location Server UE) is a UE that provides location service functions. The location server UE may be considered as a mandatory role in one sidelink positioning. The location server UE receives a location request carrying location quality of service (quality of service, QoS) or triggers the sidelink positioning requirement itself, and then determines, based on the location QoS, the positioning method used in the sidelink positioning, positioning configuration information, and which UEs participate in the positioning as anchor UEs (that is, anchor UEs).

In one sidelink positioning procedure, the location server UE may be a separate role (UE), or may also assume the role of a target UE (that is, target UE). Certainly, it can also be said that the target UE concurrently takes on the role of the location server UE. In this case, the location server UE conducts self-positioning. The location server UE may also concurrently assume the role of an anchor (Anchor) UE or a reference (Reference) UE. For example, the location server UE assists in the sending or measurement of SL PRS. The reference UE is a location reference UE during relative positioning or range positioning. The reference UE may be a separate UE or may be one of anchor UEs or the location server UE.

The target UE is a target UE for which the location server UE performs sidelink positioning. To be specific, the target UE (Target UE) is a target UE for positioning, where the positioning requires obtaining an absolute position, relative position, or ranging (ranging) of the UE. When the location server UE receives a request sent by another device, the target UE is UE indicated by the location request; and when the location server UE autonomously triggers a positioning requirement, the target UE is determined by the location server UE.

In addition, the anchor UE may be UE whose location is known (or can be known) and who participates in sending a sidelink positioning reference signal, or the anchor UE may be UE whose location is known (or can be known) and who participates in measuring a sidelink positioning reference signal.

Step 902: The target UE executes a discovery procedure for candidate anchor UEs to obtain a first list of candidate anchor UEs.

Step 903: The target UE sends a second message to the location server UE.

The second message includes the first list.

It can be learned from steps 901 to 903 that the location server UE may send the foregoing first message to the target UE to request the information about the candidate anchor UEs. In this way, after receiving the first message, the target UE may trigger the process of obtaining the candidate anchor UEs, so as to carry the obtained first list of candidate anchor UEs in the second message and returning the second message to the location server UE.

The implementation process of the foregoing step 902 "the target UE executes a discovery procedure for candidate anchor UEs to obtain a first list of candidate anchor UEs" will be described in detail below, for example, in the following way 3-1 or way 3-2 or way 3-3.

Way 3-1: Optionally, that the target UE executes a discovery procedure for candidate anchor UEs to obtain a first list of candidate anchor UEs includes:
the target UE broadcasts a discovery request message, where the discovery request message is used to request discovery of candidate anchor UEs;
the target UE receives first response messages to the discovery request message, and obtains the information about the candidate anchor UEs based on UEs corresponding to the first response message received; and
the target UE obtains the first list based on the information about the candidate anchor UEs.

Optionally, the first message includes a target condition that the candidate anchor UEs need to meet; and
that the target UE obtains the information about the candidate anchor UEs based on UEs corresponding to the first response message received includes:
the target UE determines information about UEs that meet the target condition among the UEs corresponding to the received first response message as the information about the candidate anchor UEs.

It can be learned from this that the target UE may broadcast a discovery request message. After receiving the discovery request message, UEs reply with a first response message to the target UE. The target UE then selects UEs that meet the target condition from the UEs corresponding to the received first response message as the candidate anchor UEs.

It can be learned that the target UE may also use some of UEs that meet the target condition among the UEs corresponding to the received first response message as the candidate anchor UEs.

Way 3-2: Optionally, that the target UE executes a discovery procedure for candidate anchor UEs to obtain a first list of candidate anchor UEs includes:
the target UE receives announcement messages broadcast by UEs, where the announcement messages include parameter information of the UEs;
the target UE obtains the information about the candidate anchor UEs based on UEs corresponding to the announcement message received; and
the target UE obtains the first list based on the information about the candidate anchor UEs.

Optionally, the first message includes a target condition that the candidate anchor UEs need to meet; and
that the target UE obtains the information about the candidate anchor UEs based on UEs corresponding to the announcement message received includes:
the target UE determines information about UEs that meet the target condition among the UEs corresponding to the received announcement message as the information about the candidate anchor UEs.

It can be learned from this that the target UE may receive announcement messages broadcast by UEs, where the announcement messages include parameter information of the UEs. In this way, the target UE may select UEs that meet the target condition from the UEs that send the announcement message as the candidate anchor UEs based on the parameter information in the announcement message.

It can be learned that the target UE may also use some of UEs that meet the target condition among the UEs corresponding to the received announcement message as the candidate anchor UEs.

It should be noted herein that the parameter information of the UE included in the announcement message may include at least one of the following items D-1 to D-8:
item D-1: possessing anchor UE capability;
item D-2: having known location information;
item D-3: being capable of obtaining location information;
item D-4: being in a specific mobility state;
item D-5: belonging to a specific UE type;
item D-6: possessing a specific sidelink positioning capability;
item D-7: being within a network coverage area; and
item D-8: being in a specific radio resource control RRC state.

Way 3-3: Optionally, the first message includes a target condition that the candidate anchor UEs need to meet, and the discovery request message includes the target condition; and
that the target UE receives first response messages to the discovery request message, and obtains the information about the candidate anchor UEs based on UEs corresponding to the first response messages received includes:
the target UE receives the first response messages sent by UEs that meet the target condition, and determines information about the UEs corresponding to the received first response messages as the information about the candidate anchor UEs.

It can be learned from this that the target UE may broadcast a discovery request message, where the discovery request message carries the foregoing target condition. Among the UEs that receive the discovery request message, UEs that meet the target condition each reply with a first response message to the target UE, and the target UE uses the UEs corresponding to the received first response message as candidate anchor UEs.

Optionally, the target condition includes at least one of the following items A-1 to A-12:
item A-1: having known location information;
item A-2: being capable of obtaining location information;
item A-3: being in a specific mobility state;
item A-4: having a reference signal received power RSRP measurement result greater than a first preset threshold;
item A-5: belonging to a specific UE type;
item A-6: possessing a specific sidelink positioning capability;
item A-7: being within a network coverage area;
item A-8: being within a specific area;
item A-9: being in a specific radio resource control RRC state;
item A-10: having a PC5 port resource greater than a second preset threshold;
item A-11: having established a sidelink unicast connection with the target UE; and
item A-12: being in a specified UE list.

For the relevant explanations of each of the foregoing items A-1 to A-12, refer to the foregoing description. Details are not repeated herein.

Optionally, the method further includes:
the target UE sends a location request to the location server UE, where the location request includes the first list.

It can be learned from this that if the location request received by the location server UE is sent by the target UE, the location request may carry the candidate anchor UEs obtained by the target UE. To be specific, in a case that the location request comes from the target UE, the target UE has performed the discovery procedure for anchor UEs in the recent period of time and obtained information related to the candidate anchor UEs, where this information is still valid. Thus, the information about the candidate anchor UEs may be carried in the location request, thereby reducing the positioning delay.

Optionally, the second message or the location request further includes first UE information of the candidate anchor UEs, where the first UE information includes at least one of the following item B-1 to item B-13:
item B-1: UE identifier;
item B-2: UE index;
item B-3: RRC state;
item B-4: identification information of a serving cell;
item B-5: registered access and mobility management function AMF information;
item B-6: sidelink positioning capability information;
item B-7: sidelink positioning reference signal PRS transmitting configuration information;
item B-8: sidelink resource configuration;
item B-9: sidelink resource allocation mode;
item B-10: resource scheduling type when the sidelink resource allocation mode is mode1;
item B-11: geographical location information;
item B-12: associated RSRP measurement result; and
item B-13: mobility state.

For the relevant explanations of each of the foregoing items B-1 to B-13, refer to the foregoing description. Details are not repeated herein.

When the location server UE obtains the candidate anchor UEs from the target UE, the candidate anchor UEs are identified by the target UE in performing the discovery procedure, in other words, the candidate anchor UEs are in the vicinity of the target UE, and anchor UEs to be used for participating in positioning finally selected by the location server UE are in the vicinity of the target UE. This may cause a problem: the location server UE may be too far away from some of the anchor UEs to be used for participating in positioning, resulting in the location server UE being unable to establish a sidelink unicast connection with these anchor UEs for communication.

In order to solve the preceding problem, the following way 4-1 or way 4-2 may be used to solve it.

Way 4-1: Optionally, the first message includes a second list, and candidate anchor UEs included in the second list are UE successfully discovered by the location server UE; and
that the target UE executes a discovery procedure for candidate anchor UEs to obtain a first list of candidate anchor UEs includes:
the target UE executes a discovery procedure for candidate anchor UEs for the UEs in the second list to obtain the first list of the candidate anchor UEs.

It can be learned from this that the location server UE may first perform the discovery procedure for the candidate anchor UEs before sending the first message to the target UE, and obtain the second list of candidate anchor UEs, so as to carry the second list in the first message and send the first message to the target UE. In this way, after receiving the second message, the target UE may further perform the discovery procedure to identify the candidate anchor UEs in UEs in the second list, so as to put a list of candidate anchor UEs (that is, the first list) obtained at this point in the second message and send the second message to the location server UE, that is, the candidate anchor UEs included in the second message are UEs that can be discovered by both the target UE and the location server UE.

Way 4-2: Optionally, the method further includes:
the target UE forwards a message interacted between the location server UE and at least one anchor UE to be used for participating in positioning.

The information interacted between the location server UE and the anchor UE is forwarded through the target UE, which can solve the problem of "the location server UE may be too far away from some of the anchor UEs to be used for participating in positioning, resulting in the location server UE being unable to establish a sidelink unicast connection with these anchor UEs for communication". Optionally, that the target UE forwards a message interacted between the location server UE and the anchor UE includes:
the target UE receives a third message sent by the location server UE, where the third message includes identification information or index of the anchor UE and a first container, and the first container includes a fourth message sent by the location server UE to the anchor UE; and
the target UE determines the anchor UE based on the identification information or index of the anchor UE, and sends a ninth message to the anchor UE, where the ninth message includes a third container, and the third container includes the fourth message.

It can be learned from this that when the location server UE needs to send the fourth message to the anchor UE, the location server UE first sends the third message carrying the fourth message to the target UE, so that the target UE sends a ninth message to the anchor UE, where the ninth message includes a third container, and the third container includes the fourth message. To be specific, the target UE adds the fourth message that the location server UE needs to send to the anchor UE in the ninth message and sends the ninth message to the anchor UE. Herein, the third message is one of the following: an SLPP message, a PC5 RRC message, and a PC5 signaling (that is, PC5-S) message; and the ninth message is one of the following: an SLPP message, a PC5 RRC message, and a PC5 signaling (that is, PC5-S) message.

Optionally, the third message may include a message sent to one or more anchor UEs.

Optionally, for each anchor UE, the third message may include one or more messages sent to the anchor UE so as to reduce positioning delay and signaling overhead.

It should be noted that the target UE may determine a corresponding anchor UE according to the identifier or index of the anchor UE in the third message. If no sidelink unicast connection is established between the target UE and the anchor UE, the target UE establishes a sidelink unicast connection with the anchor UE; if the unicast connection establishment fails, the target UE may also send a failure message to the location server UE, where the failure message may carry a cause value to indicate a delivery failure or a failure to establish a unicast connection. The anchor UE that fails to establish a sidelink unicast connection with the target UE cannot participate in the positioning procedure.

Optionally, that the target UE forwards a message interacted between the location server UE and the anchor UE further includes:
the target UE receives a tenth message sent by the anchor UE, where the tenth message includes a fourth container, and the fourth container includes a fifth message sent by the anchor UE to the location server UE; and
the target UE sends a sixth message to the location server UE, where the sixth message includes identification information or index of the anchor UE and a second container, and the second container includes the fifth message.

It can be learned from this that, when the anchor UE needs to send a fifth message to the location server UE, the anchor UE first sends a tenth message to the target location UE, where the tenth message includes a fourth container, and the fourth container includes the fifth message that the anchor UE needs to send to the location server UE, so that the target UE sends a sixth message carrying the fifth message to the location server UE. Herein, the tenth message is one of the following: an SLPP message, a PC5 RRC message, and a PC5 signaling (that is, PC5-S) message.

In addition, during the process of the location server UE performing interaction with the anchor UE through the target UE, the target UE is configured to forward messages. In a case that the message received by the target UE includes a container, the target UE may not decode the container.

It should be noted that the SLPP message may be a message of a newly introduced sidelink positioning protocol or a message of an LPP protocol. The newly introduced SLPP protocol layer is used for sidelink positioning. This protocol layer is used for the location server UE to perform positioning message interaction with the target UE and anchor UEs. For example, as shown in FIG. 8, the SLPP layer is a newly introduced protocol layer for sidelink positioning, which is located on the upper layer of the PDCP layer. It can be understood that SLPP may alternatively be located on the upper layer of PC5 RRC or PC5-S.

According to a third aspect, referring to FIG. 10, which is a flowchart of a positioning method according to an embodiment of this application, the method may include the following step 1001.

Step 1001: A network-side device performs interaction with a location server UE to provide the location server UE with information about candidate anchor UEs.

It can be learned from this that, in this embodiment of this application, the network-side device may provide the location server UE with the information about the candidate anchor UEs, so that the location server UE may select at least one anchor UE to be used for participating in positioning from the candidate anchor UEs, and then perform interaction with the target UE and/or the at least one anchor UE to be used for participating in positioning to perform the positioning procedure for the target UE.

The following will specifically introduce the process of the network-side device providing the information about the candidate anchor UEs to the location server UE, for example, mode 5-1 or the mode 5-2 described below.

Mode 5-1: Optionally, that a network-side device performs interaction with a location server UE to provide the location server UE with information about candidate anchor UEs includes:
the network-side device receives a first request message sent by the location server UE, where the first request message is used to request to obtain the candidate anchor UEs; and
the network-side device sends a seventh message to the location server UE in response to the first request message, where the seventh message includes a third list of the candidate anchor UEs.

It can be learned from this that the location server UE may send the foregoing first request message to the network-side device to request the information about the candidate anchor UEs. In this way, after receiving the first request message, the network-side device may carry the third list of candidate anchor UEs in the seventh message and returning the seventh message to the location server UE.

Herein, the network-side device may be, for example, an LMF or an AMF or a base station. To be specific, the LMF or the AMF or the base station may store the information about candidate anchor UEs, such as information obtained through an OAM system. After receiving the foregoing first request message sent by the location server UE, the LMF or the AMF or the base station may obtain the third list of candidate anchor UEs according to the information about the candidate anchor UEs stored therein, and then carry the third list in the seventh message and return the seventh message to the location server UE.

Optionally, the network-side device is a location management function LMF, and the first request message is a location service LCS message or a long term evolution positioning protocol LPP message; or
the network-side device is an access mobility management function AMF, and the first request message is a non-access stratum NAS message.

Optionally, the seventh message is one of an LPP message, an LCS message, a NAS message, and a dedicated RRC message.

Optionally, the first request message includes location information of the location server UE, and the candidate anchor UEs in the third list are determined based on the location information of the location server UE.

The location information of the location server UE may be latitude and longitude information, or may be an ID of a current serving cell corresponding to the location server UE.

It can be learned from this that when the location server UE sends the first request message to the network-side device to request the information about the candidate anchor UEs, it can also carry its own location information in the first request message and send the first request message to the network-side device. In this way, the network-side device may determine the candidate anchor UEs based on the location information of the location server UE (for example, select the candidate anchor UEs within a certain distance range from the location server UE, or the candidate anchor UEs in the same serving cell as the location server UE and in a neighboring serving cell of the cell corresponding to the location server UE), so as to reduce unnecessary signaling overhead, and thus carry the third list of candidate anchor UEs determined based on the location information of the location server UE in the seventh message and send the seventh message to the location server UE.

Mode 5-2: Optionally, that a network-side device performs interaction with a location server UE to provide the location server UE with information about candidate anchor UEs includes:
the network-side device sends a system information message, where the system information message includes a third list of the candidate anchor UEs.

Herein, the network-side device may be, for example, a base station. To be specific, the base station may broadcast the third list of candidate anchor UEs in a system message of a cell, so that the location server UE may receive the system message.

In addition, the system information messages may be posSIB or may be a conventional SIB message.

Optionally, before the network-side device sends the system information message, the method further includes:
the network-side device encrypts, using a predetermined key, the information about the anchor UEs included in the system information message.

It can be learned that in this embodiment of this application, the information about the candidate anchor UEs carried in the system information message (for example, the third list) may be encrypted so that only the location server UE with the corresponding key (for example, an authenticated location server UE) can correctly decrypt it.

Optionally, the seventh message or the system information message further includes second UE information of the candidate anchor UEs, where the second UE information includes at least one of the following:
item C-1: UE identifier;
item C-2: geographical location information;
item C-3: sidelink positioning capability information;
item C-4: identification information of a serving cell; and
item C-5: sidelink PRS transmitting configuration information.

For the relevant explanations of each of the foregoing items C-1 to C-5, refer to the foregoing description. Details are not repeated herein.

Optionally, the third list includes at least one UE of the following:
candidate anchor UEs in a serving cell corresponding to the location server UE; and
candidate anchor UEs in a neighboring cell of a serving cell corresponding to the location server UE.

It can be learned from this that the third list fed back by the network-side device (for example, LMF or AMF or base station) to the location server UE may include anchor UEs in the current serving cell corresponding to the location server UE, or may include anchor UEs in the current serving cell and neighboring cell of the serving cell corresponding to the location server UE.

In summary, the specific implementations of the positioning method of this embodiment of this application may be described in the following implementations 1 and 2.

### Implementation 1

The location server UE obtains the information about the candidate anchor UEs from the target UE. For example, the location server UE requests the target UE to provide the information about the candidate anchor UEs, and the target UE performs the discovery procedure for the anchor UE, and sends the information about the candidate anchor UEs to the location server UE, or the target UE actively sends the information about the candidate anchor UEs to the location server UE. In this way, the location server UE may determine one or more anchor UEs participating in the sidelink positioning based on the obtained information about the candidate anchor UEs. Based on this method, the anchor UEs to be used for participating in positioning each can measure the SL PRS sent by the target UE, or the target UE can measure the SL PRS sent by the anchor UEs to be used for participating in positioning, so as to reduce unnecessary wireless resource overhead or signaling overhead.

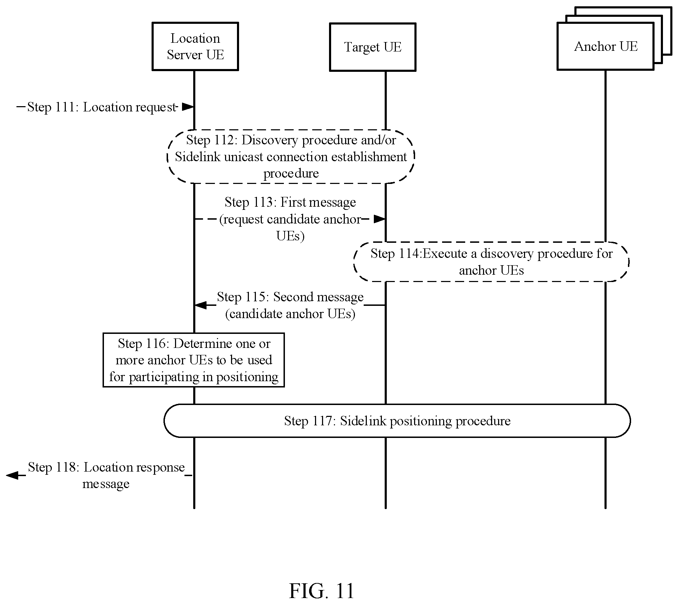

The specific process is shown in FIG. 11, and includes the following steps 111 to 118.

Step 111: The location server UE receives a location request or is triggered by itself, and needs to position the target UE or itself (in other words, the location server UE is also the target UE).

The location request carries location QoS and target UE ID. The location QoS may include positioning accuracy and positioning delay.

In addition, the location request may be one of the following messages:
a sidelink positioning protocol (that is, SLPP) message;
a PC5 signaling (that is, PC5-S) message;
a PC5 RRC message;
a location service (Location Service, LCS) message;
an LPP message; and
a NAS message.

Optionally, the location request may further include a first list of candidate anchor UEs. Further, optionally, the location request may further include first UE information of one or more candidate anchor UEs (where specific content included in the first UE information will be introduced in the subsequent step 115), so as to reduce the positioning delay. To be specific, when the location request comes from the target UE, the target UE has performed the discovery procedure for anchor UEs in the recent period of time and obtained information related to the candidate anchor UEs, where this information is still valid. Thus, the information about the candidate anchor UEs may be carried in the location request.

Step 112 (optional step): If the location server UE does not establish a sidelink unicast connection with the target UE (for example, in a scenario in which a third-party UE or a location management function (Location Management Function, LMF) or an access and mobility management function (Access and Mobility Management Function, AMF) initiates a request for positioning the target UE), the location server UE executes a discovery procedure for the target UE and/or a sidelink unicast connection establishment procedure with the target UE.

If the location server UE does not discover the target UE or fails to successfully establish a sidelink unicast connection with the target UE, the location server UE replies with a location response message or a positioning failure message to the device that has sent the location request, so as to end the process. The location response message or the positioning failure message may include a failure reason, and the failure reason may be one of failure to execute, failure to discover the target UE, and failure to establish a unicast connection.

Step 113 (optional step): The location server UE sends a first message to the target UE through a sidelink unicast connection, where the first message is used to request candidate anchor UEs.

The first message may be one of an SLPP message, an LPP message, and a PC5 RRC message.

Optionally, the first message carries a target condition, which is used to indicate a condition that the candidate anchor UEs meet. In this way, the target condition is provided so that the location server UE may obtain anchor UEs suitable for this sidelink positioning.

The target condition may include at least one of the following:
having known location information;
being capable of obtaining location information;
being in a specific mobility state (for example, stationary state);
having a reference signal received power RSRP measurement result greater than a first preset threshold (where the RSRP measurement result may be RSRP of a radio signal of the anchor UE measured by the target UE, or may be RSRP of a radio signal of the target UE measured by the anchor UE));
possessing a specific UE type (where the specific UE type may be a roadside unit (RoadSide Unit, RSU) or a positioning reference unit (Positioning Reference Unit, PRU);
possessing a specific sidelink positioning capability (where the specific sidelink positioning capability may include at least one of supporting a certain sidelink positioning method, supporting a certain sidelink measurement quantity, supporting sending SL-PRS, and supporting measuring SL-PRS.
being within a network coverage area;
being within a specific area (the specific area can be a cell or a list of cells);
being in a specified RRC state (the RRC state includes, for example, at least one of an RRC connected state and an RRC idle state);
a PC5 port resource is greater than a preset threshold;
having established a sidelink unicast connection with the target UE; and
being in a specified UE list (that is, one UE list is included in the first message, for example, these UEs in the UE list may be RSUs with fixed locations, or may be candidate anchor UEs identified by the location server UE in executing the discovery procedure).

Step 114: The target UE executes a discovery procedure for the anchor UE to find candidate anchor UEs that meet the target condition.

The target UE may adopt the following way 1 or way 2 or way 3 to obtain candidate anchor UEs that meet the target condition.

Way 1: The target UE broadcasts a discovery request message. After receiving the discovery request message, one or more UEs reply with a first response message to the target UE. The target UE then selects UEs that meet the target condition from the UEs corresponding to the received first response message as the candidate anchor UEs.

Way 2: The target UE receives an announcement message(s) broadcast by one or more UEs, where the announcement messages include parameter information of the UE(s). In this way, the target UE may select UEs that meets the target condition from the UE(s) that send the announcement message as the candidate anchor UEs based on the parameter information in the announcement message.

Way 3: The target UE broadcasts a discovery request message, where the discovery request message carries the foregoing target condition. Among the UEs that receive the discovery request message, UEs that meet the target condition each reply with a first response message to the target UE, and the target UE uses the UEs corresponding to the received first response message as candidate anchor UEs.

The discovery request message may be a PC5-D message, for example, a direct discovery solicitation (direct discovery solicitation), and thus the first response message may correspondingly be a direct discovery response (direct discovery response); or the discovery request message may be a message introduced in the sidelink positioning protocol, where the message is broadcast and sent for discovering candidate anchor UEs.

Step 115: The target UE sends a second message to the location server UE, where the second message carries a first list of candidate anchor UEs.

Optionally, the second message is a response message to the first message, and the second message may be one of an SLPP message, an LPP message, and a PC5 RRC message.

Optionally, the second message also carries first UE information of one or more candidate anchor UEs.

For each candidate anchor UE, the first UE information of the candidate anchor UE includes at least one of the following:
UE ID, which may include, for example, at least one of S-TMS, IMSI, SUPI, C-RNTI, SL layer2 ID, and application layer UE ID;
UE index (each candidate anchor UE is assigned a UE index to facilitate subsequent interaction);
an RRC state (which may include at least one of an RRC connected state, an RRC idle state, and an RRC deactivated state);
a serving cell ID (which may include at least one of a frequency, PCI, and CGI of the serving cell);
registered AMF information (which may include at least one of a current serving PLMN ID and an AMF ID of a registered AMF);
a sidelink positioning capability (which may include at least one of whether to support sending SL-PRS, whether to support measuring SL-PRS, a supported sidelink positioning method, and whether to provide its own location);
sidelink PRS transmitting configuration information, where the anchor UE sends SL PRS on resources indicated by the configuration information;
sidelink resource configuration, where the resource configuration includes sidelink resources currently used by the anchor UE and/or sidelink resources configured by a base station for the anchor UE;
a sidelink resource allocation mode, where the resource allocation mode includes mode1 and mode2;
a resource scheduling type when the sidelink resource allocation mode of the candidate anchor UE being mode1, to be specific, if the sidelink resource allocation mode of the candidate anchor UE is mode1, the first UE information may further specifically include which of the following resource scheduling types: dynamic scheduling (dynamic scheduling), meaning that resources are dynamically scheduled by a base station; configured grant type 1 (configured grant type 1), meaning that periodic resources configured by a base station can be used directly; and configured grant type 2 (configured grant type 2), meaning that periodic resources configured by a base station can be used only after the periodic resources are activated);
geographical location information, for example, latitude and longitude information;
an RSRP measurement result associated with the candidate anchor UEs (RSRPs associated with the candidate anchor UEs may include RSRP of a radio signal of the candidate anchor UE measured by the target UE or RSRP of a radio signal of the target UE measured by the candidate anchor UE); and
mobility state.

Step 116: The location server UE may determine anchor UEs to be used for participating in positioning based on the first UE information of the candidate anchor UEs and information such as location QoS.

For example, each candidate anchor UE serves as an anchor UE to be used for participating in positioning; or
a sidelink positioning method is determined based on the location QoS, and UEs supporting the positioning method are selected from the candidate anchor UEs as the anchor UEs to be used for participating in positioning; or
after sorting according to sizes of RSRPs, UEs with high RSRP (for example, greater than a certain threshold) are selected as anchor UEs to be used for participating in positioning; or
candidate anchor UEs that can establish a sidelink unicast connection with the location server UE are selected from these candidate anchor UEs as the anchor UEs to be used for participating in positioning.

Step 117: The location server UE executes a sidelink positioning procedure.

The sidelink positioning procedure may include: the location server UE performs interaction with both the target UE and the anchor UE to be used for participating in positioning, for example: configuring the anchor UE to send SL PRS, configuring the target UE to measure SL PRS, or configuring the target UE to send SL PRS, configuring the anchor UE to measure SL PRS; and the location server UE receives a positioning measurement result sent by the anchor UE or the target UE.

Step 118: The location server UE obtains a location result of the target UE, for example, calculates the location of the target UE based on the positioning measurement result. The location server UE sends a location response message carrying the location result of the target UE.

In this implementation 1, the candidate anchor UE is identified by the target UE in executing a discovery procedure, meaning that the candidate anchor UE is in the vicinity of the target UE, and the anchor UE to be used for participating in positioning finally selected by the location server UE is in the vicinity of the target UE. This may lead to a problem: the location server UE may be too far away from some of the anchor UEs to be used for participating in positioning, resulting in the location server UE being unable to establish a sidelink unicast connection with these anchor UEs for communication in step 117.

In order to solve the preceding problem, the following method 1 or method 2 may be used to solve it.

Method 1: The location server UE selects the candidate anchor UEs that can establish a sidelink unicast connection with the location server UE from the candidate anchor UEs obtained from the target UE, and then further selects the anchor UEs that participate in positioning from these UEs, so as to avoid the preceding problem.

Specifically, for example, after the foregoing step 115 and before the foregoing step 116, the location server UE executes a discovery procedure for the candidate anchor UEs carried in the second message, or attempts to establish a sidelink unicast connection with these candidate anchor UEs. In this way, in performing the foregoing step 116, the anchor UE to be used for participating in positioning is selected from the candidate anchor UEs that can be successfully discovered or successfully established with a sidelink unicast connection; or
for example, before the foregoing step 113, the location server UE first performs a discovery procedure for candidate anchor UEs to obtain a second list of candidate anchor UEs, and then, in performing the foregoing step 113, adds the second list in the first message and sends the first message to the target UE. In this way, in performing the foregoing step 114, the target UE further executes a discovery procedure to identify the candidate anchor UEs among the UEs in the second list, and then, in performing the foregoing step 115, places the list of candidate anchor UEs obtained in step 114 (that is, the first list) in the second message and sends the second message to the location server UE, meaning that the candidate anchor UEs included in the second message are UEs that can be discovered by both the target UE and the location server UE. In this way, in performing the foregoing step 116, the anchor UE to be used for participating in positioning is selected from the candidate anchor UEs included in the second message.

It should be noted herein that the foregoing method 1 may result in too few anchor UEs, so as to decrease positioning accuracy or even make the positioning impossible.

Method 2: The location server UE may perform interaction with an anchor UE to be used for participating in positioning through target UE, meaning that the information interacted between the location server UE and the anchor UE to be used for participating in positioning is forwarded through target UE, also meaning that the location server UE first sends a message to the target UE, and indicates that the message is sent to an anchor UE and to which anchor UE, and the target UE then sends the message to the corresponding anchor UE.

When there are multiple anchor UEs to be used for participating in positioning, the information interacted between the location server UE and each of the anchor UEs to be used for participating in positioning may be forwarded through the target UE.

Alternatively, the information interacted between the location server UE and some of anchor UEs to be used for participating in positioning is forwarded through the target UE, and the communication between the other of the anchor UEs to be used for participating in positioning and the location server UE is implemented through establishment of a sidelink unicast connection. For example, after selecting the anchor UEs to be used for participating in positioning, the location server UE may first attempt to discover each of the anchor UEs to be used for participating in positioning or establish a sidelink unicast connection with each of the anchor UEs to be used for participating in positioning. For anchor UEs that fail to be discovered or fail to establish a unicast connection, the information is forwarded through the target UE, otherwise the interaction is directly performed through the sidelink unicast connection.

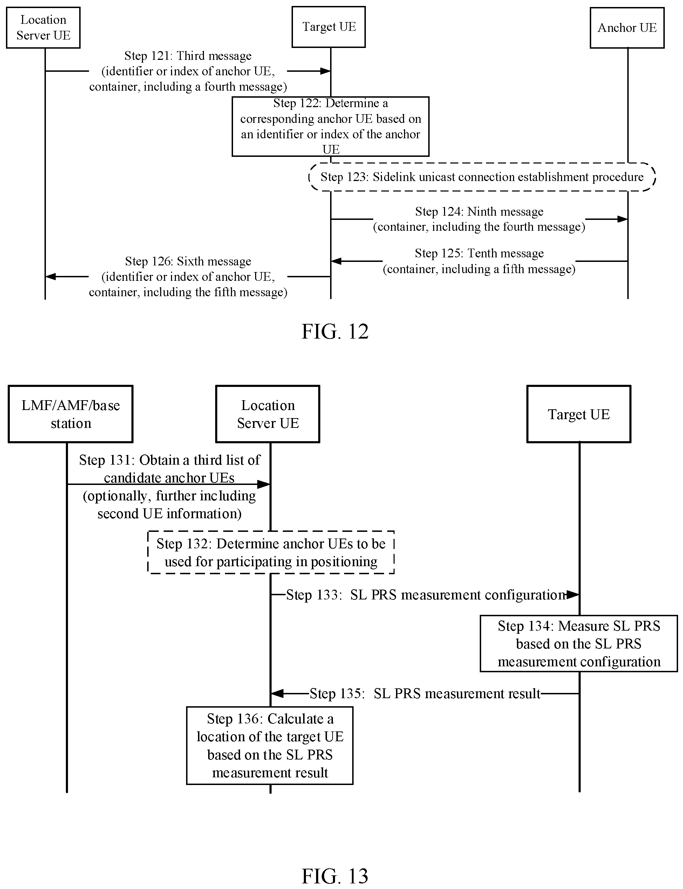

In addition, the process of forwarding the information interacted between the location server UE and one of the anchor UEs to be used for participating in positioning through the target UE may be as shown in FIG. 12, and specifically includes the following steps 121 to 126.

Step 121: In a case that the location server UE needs to send a fourth message (for example, an SLPP message) to the anchor UE, the location server UE sends a third message to the target UE, where the third message is used to transfer the fourth message sent to the anchor UE.

The third message includes an UE ID or UE index of the anchor UE and a container (that is, a container, the target UE does not decode the content of the container), where the container corresponds to the fourth message sent to the anchor UE; and the third message may be an SLPP message or a PC5 RRC or a PC5-S message.

In addition, each anchor UE corresponds to one UE ID or UE index of the anchor UE.

Optionally, the third message may include a message sent to one or more anchor UEs.

Optionally, for each anchor UE, the third message may include one or more messages sent to the anchor UE so as to reduce positioning delay and signaling overhead.

Step 122: The target UE determines the corresponding anchor UE based on the UE ID or UE index of (each) anchor UE in the third message.

Step 123: If no sidelink unicast connection is established between the target UE and the anchor UE, the target UE establishes a sidelink unicast connection with the anchor UE. If the unicast connection establishment fails, the target UE sends a failure message to the location server UE, where the failure message may carry a cause value to indicate a delivery failure or a unicast connection establishment failure.

Step 124: The target UE sends a ninth message to the anchor UE through the sidelink unicast connection between the target UE and the anchor UE, where the ninth message is used to send the fourth message from the location server UE to the anchor UE. The ninth message may be an SLPP message or a PC5 RRC or PC5-S message. The ninth message includes a container, where the container corresponds to the SLPP message in step 1, that is, the fourth message sent by the location server UE to the anchor UE.

Step 125: In a case that the anchor UE needs to send the fifth message (for example, an SLPP message) to the location server UE, the anchor UE sends a tenth message to the target UE, where the tenth message is used to transfer the fifth message sent to the location server UE.

The tenth message includes a container, where the container corresponds to the fifth message; and the tenth message may be an SLPP message or a PC5 RRC or a PC5-S message.

Step 126: The target UE sends a sixth message to the location server UE, where the sixth message is used to send the fifth message from the anchor UE to the location server UE. The sixth message includes a UE ID or UE index of the anchor UE and a container, where the container corresponds to the fifth message sent to the location server UE.

The location server UE determines which anchor UE sends the message, based on the UE ID or UE index of the anchor UE.

### Implementation 2

The location server UE obtains the information about one or more candidate anchor UEs from a network-side device (for example, LMF or AMF or base station), and then the location server UE selects an anchor UE to be used for participating in positioning from these candidate anchor UEs. For example, the candidate anchor UE near the location server UE may be selected as the anchor UE to be used for participating in positioning, or the anchor UE to be used for participating in positioning may be selected according to a capability of the target UE.

In this embodiment, it can be assumed that the anchor UE (for example, RSU) always sends SL PRS for positioning, its SL PRS transmitting configuration may not be controlled by the location server UE, and the anchor UE does not need to perform measurement; and the target UE always performs SL PRS measurement and does not need to send SL PRS. Therefore, the location server UE may not perform sidelink communication with the anchor UE, but only needs to obtain the information related to the candidate anchor UEs from the network-side device.

The specific process is shown in FIG. 13, and includes the following steps 131 to 136.

Step 131: Before or after receiving a location request, the location server UE obtains a third list of candidate anchor UEs from the LMF or the base station or the AMF.

Optionally, the location server UE may further obtain second UE information of the candidate anchor UEs from the LMF or the base station or the AMF.

The second UE information of each candidate anchor UE may include at least one of the following:
UE ID, which may include, for example, at least one of SL layer2 ID, application layer UE ID, S-TMSI, IMSI, SUPI, and C-RNTI;
location information, for example, latitude and longitude information;
positioning capability information;
a serving cell ID; and
SL PRS transmitting configuration, which may include, for example, at least one of SL PRS transmission resource pool configuration, SL PRS period/resource location, and an SL PRS resource repetition factor.

Specifically, the method by which the location server UE obtains information about one or more candidate anchor UEs from the LMF or AMF base station will be described in detail later.

Step 132: The location server UE determines one or more anchor UEs to be used for participating in positioning based on the information about one or more candidate anchor UEs obtained in step 131.

The location server UE may alternatively act as an anchor UE itself.

In addition, for example, it may be determined that all candidate anchor UEs participate in positioning; or
considering that the target UE is near the location server UE, the location server UE selects anchor UEs that may be within a certain distance of the location server UE to participate in positioning. For example, assuming that a maximum distance of SL PRS transmission is 200 meters, the location server UE may select anchor UEs within 400 meters of itself to participate in positioning. Because the location server UE and the target UE are within 200 meters, the anchor UEs to be used for participating in positioning need to be within 200 meters of the target UE. Therefore, the distance between the location server UE and the anchor UEs to be used for participating in positioning cannot exceed 400 meters, otherwise the target UE cannot receive the SL PRS of the anchor UE; or
considering the positioning capability of the anchor UE, candidate anchor UEs whose positioning capability supports a certain positioning method may be selected to participate in the positioning.

Step 133: The location server UE sends an SL PRS measurement configuration corresponding to each anchor UE to the target UE.

It should be noted herein that such configuration is SL PRS measurement configuration for the target UE and is SL PRS transmitting configuration for the anchor UE.

Step 134: The target UE measures SL PRS based on the received SL PRS measurement configuration to obtain an SL PRS measurement result.

Step 135: The target UE sends the SL PRS measurement result to the location server UE.

Step 136: The location server UE calculates a location of the target UE based on the SL PRS measurement result.

The following specifically describes in this implementation a method by which the location server UE obtains information about one or more candidate anchor UEs from the LMF or AMF base station.

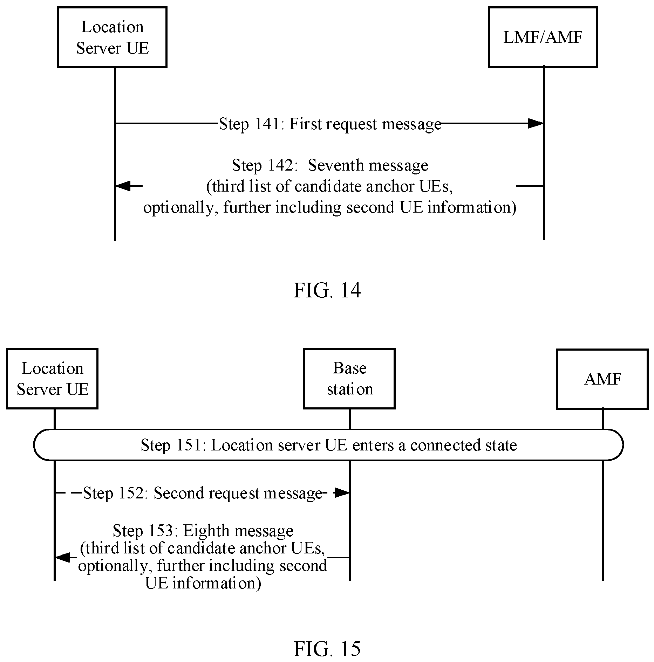

Method 1: As shown in FIG. 14, the process in which the location server UE obtains information about one or more candidate anchor UEs from the LMF or AMF includes steps 141 and 142 as described below.

Step 141: The location server UE sends a first request message to the LMF or AMF to request information about the anchor UE.

The first request message may be an LCS message, such as a mobile originated location request (Mobile Originated Location Request, MO-LR) message initiated by UE; the first request message carries indication information for indicating a request to obtain the information about the candidate anchor UEs; and the first request message may alternatively be an LPP message or a NAS message.

Optionally, the first request message carries location information of the location server UE, and the location information may be latitude and longitude information, or may be a current serving cell ID of the location server UE.

Step 142: If the LMF or AMF has the information about the candidate anchor UEs (for example, obtained through the operation administration and maintenance (Operation Administration and Maintenance, OAM) system) saved, the LMF or AMF sends a seventh message to the location server UE, where the seventh message carries a third list of candidate anchor UEs.

The seventh message may be an LPP message, or may be an LCS message, or a NAS message.

Optionally, the seventh message may further carry the second UE information of the candidate anchor UEs. The specific content included in the second UE information may be found in the foregoing description, and will not be repeated herein.

Optionally, the LMF or AMF may further determine, based on the location information of the location server UE, that information about which candidate anchor UEs is carried in the seventh message, for example, selecting candidate anchor UEs within a certain distance range from the location server UE or candidate anchor UEs in the same serving cell as the location server UE and in a neighboring serving cell of the serving cell, so as to reduce unnecessary signaling overhead.

Method 2: As shown in FIG. 15, the process in which the location server UE obtains information about one or more candidate anchor UEs from the base station includes steps 151 to 153 as described below.

Step 151: The location server UE enters a connected state.

Step 152 (optional step): The location server UE sends a second request message to the base station.

The second request message may be an RRC message, such as a sidelink UE information (Sidelink UE Information) message, and the second request message carries indication information for indicating a request to obtain the information about the candidate anchor UEs.

Step 153: The base station stores the information about the candidate anchor UEs (for example, obtained through the OAM system), and the base station sends an eighth message to the location server UE, where the eighth message carries the third list of candidate anchor UEs.

Optionally, the eighth message may further carry the second UE information of the candidate anchor UEs. The specific content included in the second UE information may be found in the foregoing description, and will not be repeated herein.

Optionally, the eighth message may be a dedicated RRC message.

Optionally, the third list carried in the eighth message may include anchor UEs in the current serving cell, or may include anchor UEs in the current serving cell and a neighboring cell of the current serving cell.

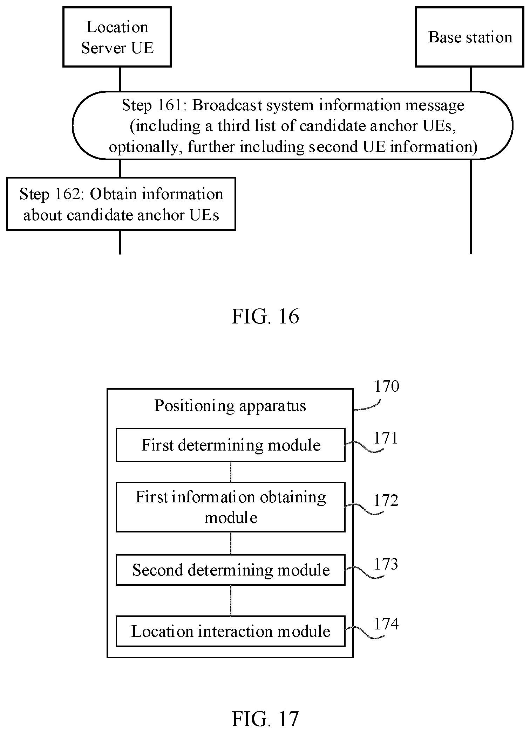

Method 3: As shown in FIG. 16, the process in which the location server UE obtains information about one or more candidate anchor UEs from the base station includes steps 161 to 162 as described below.

Step 161: The base station broadcasts a third list of candidate anchor UEs in a system information message of the cell.

The third list may include anchor UEs in the current serving cell, or may include anchor UEs in the current serving cell and a neighboring cell of the current serving cell.

In addition, the system information message may further carry the second UE information of the candidate anchor UEs. The specific content included in the second UE information may be found in the foregoing description, and will not be repeated herein.

In addition, the system information messages may be posSIB or may be a conventional SIB.

Step 162: The location server UE obtains the candidate anchor UEs by reading system information of the serving cell.

Optionally, the information about the candidate anchor UEs carried in the system information message (including the foregoing third list and/or second UE information) may be encrypted so that only the UE with a corresponding key (for example, the authenticated location server UE) can correctly decrypt it.

It should be noted that FIGs. 11 to 16 only list the important information transmitted or the important actions performed in the various steps, where the specific content of the various steps in FIGs. 11 to 16 can be found in the foregoing description.

The positioning method according to this embodiment of this application may be executed by a positioning apparatus. In this embodiment of this application, assuming that the positioning apparatus executes the positioning method, the positioning apparatus provided in the embodiments of this application is described.

According to a fourth aspect, an embodiment of this application provides a positioning apparatus, applied to a location server UE, as shown in FIG. 17, the positioning apparatus includes:
a first determining module 171, configured to determine to perform sidelink positioning for a target UE;
a first information obtaining module 172, configured to obtain information about candidate anchor UEs;
a second determining module 173, configured to determine at least one anchor UE to be used for participating in positioning from the candidate anchor UEs; and
a location interaction module 174, configured to perform interaction with the target UE and/or the at least one anchor UE to position the target UE.

Optionally, the first information obtaining module 172 includes:
a first obtaining sub-module, configured to obtain the information about the candidate anchor UEs from the target UE; or
a second obtaining sub-module, configured to perform interaction with a network-side device to obtain the information about the candidate anchor UEs.

Optionally, the first obtaining sub-module is specifically configured to:
send a first message to the target UE, where the first message is used to request to obtain the information about the candidate anchor UEs;
receive a second message sent by the target UE in response to the first message, where the second message includes a first list of the candidate anchor UEs; and
obtain the information about the candidate anchor UEs based on the first list in the second message.

Optionally, the apparatus further includes:
a first processing module, configured to, in a case that a sidelink unicast connection has not been established between the location server UE and the target UE, execute a discovery procedure for the target UE and/or a sidelink unicast connection establishment procedure with the target UE; where
that the first obtaining sub-module sends a first message to the target terminal is specifically configured to:
   in a case that a sidelink unicast connection has been successfully established between the location server UE and the target UE, send the first message to the target UE through the sidelink unicast connection between the location server UE and the target UE; and
   that the first obtaining sub-module receives a second message sent by the target UE in response to the first message is specifically configured to:
      in a case that a sidelink unicast connection has been successfully established between the location server UE and the target UE, receive the second message through the sidelink unicast connection between the location server UE and the target UE.

Optionally, the apparatus further includes:
a second sending module, configured to, in a case that the target UE is not successfully discovered and/or the sidelink unicast connection has not been successfully established between the location server UE and the target UE, send a location response message or a positioning failure message to a device that has sent a location request, where the location response message or the positioning failure message carries first indication information, and the first indication information is used to indicate that the target UE is not successfully discovered and/or the sidelink unicast connection is not successfully established between the location server UE and the target UE.

Optionally, the first message includes a target condition that the candidate anchor UEs need to meet, and the candidate anchor UEs in the first list meet the target condition.

The target condition includes at least one of the following:
having known location information;
being capable of obtaining location information;
being in a specific mobility state;
having a reference signal received power RSRP measurement result greater than a first preset threshold;
belonging to a specific UE type;
possessing a specific sidelink positioning capability;
being within a network coverage area;
being within a specific area;
being in a specific radio resource control RRC state;
having a PC5 port resource greater than a second preset threshold;
having established a sidelink unicast connection with the target UE; and
being in a specified UE list.

Optionally, the first determining module 171 is specifically configured to:
receive a location request, where the location request is used to request positioning of the target UE; and
determine, in response to the location request, to perform sidelink positioning for the target UE.

Optionally, the location request is sent by the target UE, and the location request includes a first list of the candidate anchor UEs; and
the first obtaining sub-module is specifically configured to:
obtain the information about the candidate anchor UEs based on the first list in the location request.

Optionally, the second message or the location request further includes first UE information of the candidate anchor UEs, where the first UE information includes at least one of the following:
UE identifier;
UE index;
RRC state;
identification information of a serving cell;
registered access and mobility management function AMF information;
sidelink positioning capability information;
sidelink positioning reference signal PRS transmitting configuration information;
sidelink resource configuration;
sidelink resource allocation mode;
resource scheduling type when the sidelink resource allocation mode is mode1;
geographical location information;
associated RSRP measurement result; and
mobility state.

Optionally, the apparatus further includes:
a second processing module, configured to execute a discovery procedure and/or a sidelink unicast connection establishment procedure for each UE in the first list; where
the second determining module 173 is specifically configured to:
   determine the at least one anchor UE to be used for participating in positioning from a first category of UEs in the first list, where the first category of UEs are UEs for which the location server UE has successfully performed discovery and/or established a sidelink unicast connection.

Optionally, the apparatus further includes:
a third processing module, configured to execute a discovery procedure for candidate anchor UEs before the first obtaining sub-module sends the first message to the target UE to obtain a second list of candidate anchor UEs; where
the candidate anchor UEs included in the second list are UEs successfully discovered by the location server UE, the first message includes the second list, and the candidate anchor UEs included in the first list are UEs successfully discovered by the target UE in the second list.

Optionally, the location interaction module 174 includes:
a first interaction sub-module, configured to perform interaction with the anchor UE through the target UE; or
a second interaction sub-module, configured to, in a case that the location server UE has successfully established a sidelink unicast connection with the anchor UE, perform interaction with the anchor UE through the sidelink unicast connection between the location server UE and the anchor UE.

Optionally, the first interaction sub-module is used to perform at least one of the following:
sending a third message to the target UE, where the third message includes identification information or index of the anchor UE and a first container, and the first container includes a fourth message sent by the location server UE to the anchor UE; and
receiving a sixth message sent by the target UE, where the sixth message includes identification information or index of the anchor UE and a second container, and the second container includes a fifth message sent by the anchor UE to the location server UE.

Optionally, the second obtaining sub-module is specifically configured to:
send a first request message to the network-side device, where the first request message is used to request to obtain the information about the candidate anchor UEs;
receive a seventh message sent by the network-side device in response to the first request message, where the seventh message includes a third list of the candidate anchor UEs; and
obtain the information about the candidate anchor UEs based on the third list in the seventh message.

Optionally, the first request message includes location information of the location server UE, and the candidate anchor UEs in the third list are determined based on the location information of the location server UE.

Optionally, the network-side device is a location management function LMF, and the first request message is a location service LCS message or a long term evolution positioning protocol LPP message; or
the network-side device is an access mobility management function AMF, and the first request message is a non-access stratum NAS message.

Optionally, the seventh message is one of an LPP message, an LCS message, a NAS message, and a dedicated RRC message.

Optionally, the second obtaining sub-module is specifically configured to:
receive a system information message sent by the network-side device, where the system information message includes a third list of the candidate anchor UEs; and
obtain the information about the candidate anchor UEs based on the third list in the system information message.

Optionally, the information about the anchor UEs included in the system information message is encrypted information; and
that the second obtaining sub-module obtains the information about the candidate anchor UEs based on the third list in the system information message is specifically configured to:
in a case that a predetermined key is stored in the location server UE, decrypt, using the predetermined key, the encrypted information in the system information message to obtain the third list; and
obtain the information about the candidate anchor UEs based on the third list.

Optionally, the seventh message or the system information message further includes second UE information of the candidate anchor UEs, where the second UE information includes at least one of the following:
UE identifier;
geographical location information;
sidelink positioning capability information;
identification information of a serving cell; and
sidelink PRS transmitting configuration information.

Optionally, the third list includes at least one UE of the following:
candidate anchor UEs in a serving cell corresponding to the location server UE; and
candidate anchor UEs in a neighboring cell of a serving cell corresponding to the location server UE.

The positioning apparatus in this embodiment of this application may be an electronic device, for example, an electronic device with an operating system, or may be a component in an electronic device, for example, an integrated circuit or a chip. The electronic device may be a terminal. For example, the terminal may include but is not limited to the types of the terminal 11 listed above, which are not specifically limited in the embodiments of this application.

The positioning apparatus provided in this embodiment of this application can implement the processes implemented by the method embodiment in FIG. 7, with the same technical effects achieved. To avoid repetition, details are not described herein again.

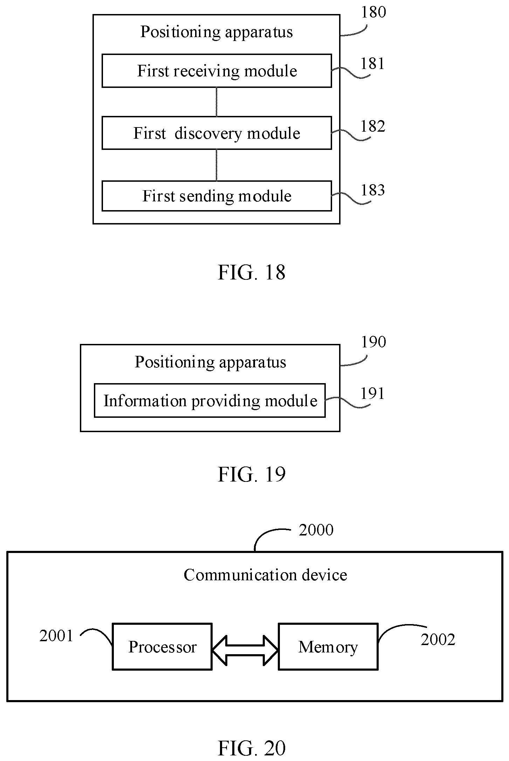

According to a fifth aspect, an embodiment of this application provides a positioning apparatus, applied to a target UE, as shown in FIG. 18, the positioning apparatus includes:
a first receiving module 181, configured to receive a first message sent by a location server UE, where the first message is used to request information about candidate anchor UEs;
a first discovery module 182, configured to execute a discovery procedure for candidate anchor UEs to obtain a first list of candidate anchor UEs; and
a first sending module 183, configured to send a second message to the location server UE, where the second message includes the first list.

Optionally, the first discovery module 182 is specifically configured to:
broadcast a discovery request message, where the discovery request message is used to request discovery of candidate anchor UEs;
receive first response messages to the discovery request message, and obtain the information about the candidate anchor UEs based on UEs corresponding to the first response message received; and
obtain the first list based on the information about the candidate anchor UEs; or
receive announcement messages broadcast by UEs, where the announcement messages include parameter information of the UEs;
obtain the information about the candidate anchor UEs based on UEs corresponding to the announcement message received; and
obtain the first list based on the information about the candidate anchor UEs.

Optionally, the first message includes a target condition that the candidate anchor UEs need to meet; and
that the first discovery module 182 obtains the information about the candidate anchor UEs based on UEs corresponding to the first response message or announcement message received is specifically configured to:
determine information about UEs that meet the target condition among the UEs corresponding to the received first response message or announcement message as the information about the candidate anchor UEs.

Optionally, the first message includes a target condition that the candidate anchor UEs need to meet, and the discovery request message includes the target condition; and
that the first discovery module 182 receives first response messages to the discovery request message, and obtains the information about the candidate anchor UEs based on UEs corresponding to the first response messages received is specifically configured to:
receive the first response messages sent by UEs that meet the target condition, and determine information about the UEs corresponding to the received first response messages as the information about the candidate anchor UEs.

Optionally, the target condition includes at least one of the following:
having known location information;
being capable of obtaining location information;
being in a specific mobility state;
having a reference signal received power RSRP measurement result greater than a first preset threshold;
belonging to a specific UE type;
possessing a specific sidelink positioning capability;
being within a network coverage area;
being within a specific area;
being in a specific radio resource control RRC state;
having a PC5 port resource greater than a second preset threshold;
having established a sidelink unicast connection with the target UE; and
being in a specified UE list.

Optionally, the apparatus further includes:
a third sending module, configured to send a location request to the location server UE, where the location request includes the first list.

Optionally, the second message or the location request further includes first UE information of the candidate anchor UEs, where the first UE information includes at least one of the following:
UE identifier;
UE index;
RRC state;
identification information of a serving cell;
registered access and mobility management function AMF information;
sidelink positioning capability information;
sidelink positioning reference signal PRS transmitting configuration information;
sidelink resource configuration;
sidelink resource allocation mode;
resource scheduling type when the sidelink resource allocation mode is mode1;
geographical location information;
associated RSRP measurement result; and
mobility state.

Optionally, the first message includes a second list, and candidate anchor UEs included in the second list are UE successfully discovered by the location server UE; and
the first discovery module 182 is specifically configured to:
execute a discovery procedure for candidate anchor UEs for the UEs in the second list to obtain the first list of the candidate anchor UEs.

Optionally, the apparatus further includes:
a forwarding module, configured to forward a message interacted between the location server UE and at least one anchor UE to be used for participating in positioning.

Optionally, the forwarding module is specifically configured to:
receive a third message sent by the location server UE, where the third message includes identification information or index of the anchor UE and a first container, and the first container includes a fourth message sent by the location server UE to the anchor UE; and
determine the anchor UE based on the identification information or index of the anchor UE, and send a ninth message to the anchor UE, where the ninth message includes a third container, and the third container includes the fourth message.

Optionally, the forwarding module is further configured to:
receive a tenth message sent by the anchor UE, where the tenth message includes a fourth container, and the fourth container includes a fifth message sent by the anchor UE to the location server UE; and
send a sixth message to the location server UE, where the sixth message includes identification information or index of the anchor UE and a second container, and the second container includes the fifth message.

The positioning apparatus in this embodiment of this application may be an electronic device, for example, an electronic device with an operating system, or may be a component in an electronic device, for example, an integrated circuit or a chip. The electronic device may be a terminal. For example, the terminal may include but is not limited to the types of the terminal 11 listed above, which are not specifically limited in the embodiments of this application.

The positioning apparatus provided in this embodiment of this application can implement the processes implemented by the method embodiment in FIG. 9, with the same technical effects achieved. To avoid repetition, details are not described herein again.

According to a sixth aspect, an embodiment of this application provides a positioning apparatus, applied to a network-side device. As shown in FIG. 19, the positioning apparatus includes:
an information providing module 191, configured to perform interaction with a location server UE to provide the location server UE with information about candidate anchor UEs.

Optionally, the information providing module 191 is specifically configured to:
receive a first request message sent by the location server UE, where the first request message is used to request to obtain the candidate anchor UEs; and
send a seventh message to the location server UE in response to the first request message, where the seventh message includes a third list of the candidate anchor UEs.

Optionally, the network-side device is a location management function LMF, and the first request message is a location service LCS message or a long term evolution positioning protocol LPP message; or
the network-side device is an access mobility management function AMF, and the first request message is a non-access stratum NAS message.

Optionally, the seventh message is one of an LPP message, an LCS message, a NAS message, and a dedicated RRC message.

Optionally, the information providing module 191 is specifically configured to:
send a system information message, where the system information message includes a third list of the candidate anchor UEs.

Optionally, the apparatus further includes:
an encryption module, configured to encrypt, using a predetermined key, the information about the anchor UEs included in the system information message before the information providing module sends the system information message.

Optionally, the seventh message or the system information message further includes second UE information of the candidate anchor UEs, where the second UE information includes at least one of the following:
UE identifier;
geographical location information;
sidelink positioning capability information;
identification information of a serving cell; and
sidelink positioning reference signal PRS transmitting configuration information.

Optionally, the third list includes at least one UE of the following:
candidate anchor UEs in a serving cell corresponding to the location server UE; and
candidate anchor UEs in a neighboring cell of a serving cell corresponding to the location server UE.

The positioning apparatus in this embodiment of this application may be an electronic device, for example, an electronic device with an operating system, or may be a component in an electronic device, for example, an integrated circuit or a chip. The electronic device may be a network-side device. For example, the network-side device may include but is not limited to the types of the network-side device 12 listed above, which are not specifically limited in the embodiments of this application.

The positioning apparatus provided in this embodiment of this application can implement the processes implemented by the method embodiment in FIG. 10, with the same technical effects achieved. To avoid repetition, details are not described herein again.

Optionally, as shown in FIG. 20, an embodiment of this application further provides a communication device 2000, including a processor 2001 and a memory 2002, where the memory 2002 stores a program or instructions capable of running on the processor 2001. For example, when the interaction device 2000 is a terminal, the program or instructions are executed by the processor 2001 to implement the steps of the positioning method embodiment according to the first aspect or the second aspect, with the same technical effects achieved. When the communication device 2000 is a network-side device, the program or instructions are executed by the processor 2001 to implement the steps of the positioning method embodiment according to the third aspect, with the same technical effects achieved. To avoid repetition, details are not described herein again.

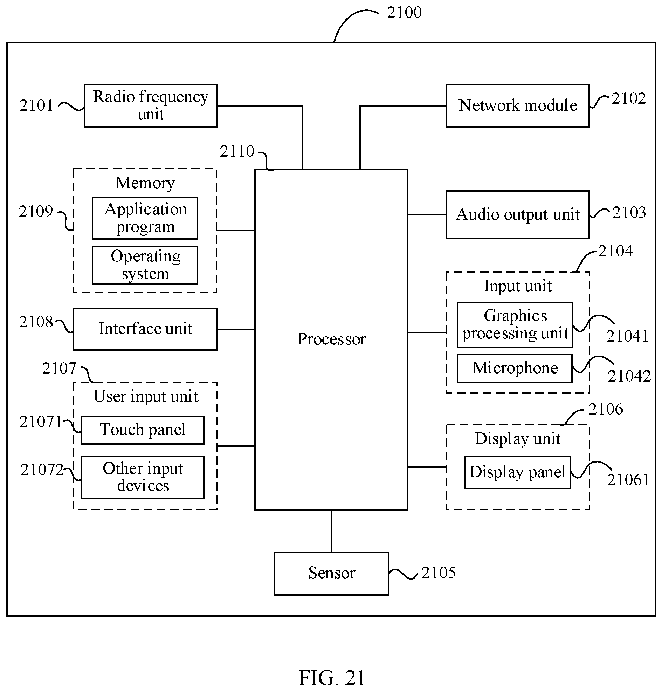

An embodiment of this application further provides a terminal, as shown in FIG. 21, which is a schematic diagram of a hardware structure of a terminal for implementing the embodiments of this application.

The terminal 2100 includes, but is not limited to, at least some of components such as a radio frequency unit 2101, a network module 2102, an audio output unit 2103, an input unit 2104, a sensor 2105, a display unit 2106, a user input unit 2107, an interface unit 2108, a memory 2109, and a processor 2110.

Persons skilled in the art can understand that the terminal 2100 may further include a power supply (for example, a battery) for supplying power to the components. The power supply may be logically connected to the processor 2110 through a power management system. In this way, functions such as charge management, discharge management, and power consumption management are implemented by using the power management system. The structure of the terminal shown in FIG. 21 does not constitute any limitation on the terminal. The terminal may include more or fewer components than shown in the figure, or a combination of some components, or the components disposed differently. Details are not described herein again.

It should be understood that in this embodiment of this application, the input unit 2104 may include a graphics processing unit (Graphics Processing Unit, GPU) 21041 and a microphone 21042. The graphics processing unit 21041 processes image data of a static picture or a video that is obtained by an image capture apparatus (for example, a camera) in a video capture mode or an image capture mode. The display unit 2106 may include a display panel 21061, and the display panel 21061 may be configured in a form of a liquid crystal display, an organic light-emitting diode, and the like. The user input unit 2107 includes at least one of a touch panel 21071 and other input devices 21072. The touch panel 21071 is also referred to as a touchscreen. The touch panel 21071 may include two parts: a touch detection apparatus and a touch controller. The other input devices 21072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 2101 may transmit the downlink data to the processor 2110 for processing. In addition, the radio frequency unit 2101 may transmit uplink data to the network-side device. Generally, the radio frequency unit 2101 includes but is not limited to an antenna, an amplifier, a transceiver, a coupler, a low noise amplifier, and a duplexer.

The memory 2109 may be configured to store software programs or instructions and various data. The memory 2109 may include first storage area for storing programs or instructions and a second storage area for storing data. The first storage area may store an operating system, an application program or instruction required by at least one function (for example, a sound playback function or an image playback function), and the like. In addition, the memory 2109 may include either a volatile memory or a non-volatile memory, or the memory 2109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 2109 in this embodiment of this application includes but is not limited to these and any other suitable types of memories.

The processor 2110 may include one or more processing units. Optionally, an application processor and a modem processor are integrated in the processor 2110. The application processor primarily processes operations relating to an operating system, user interfaces, application programs, and the like. The modem processor primarily processes radio communication signals, for example, being a baseband processor. It can be understood that the modem processor may alternatively be not integrated in the processor 2110.

When the terminal 2100 serves as a location server UE, the processor 2110 is configured to: determine to perform sidelink positioning for a target UE; obtain information about candidate anchor UEs; and determine at least one anchor UE to be used for participating in positioning from the candidate anchor UEs; and
a radio frequency unit 2101, configured to perform interaction with the target UE and/or the at least one anchor UE to position the target UE.

Optionally, that the processor 2110 obtains information about candidate anchor UEs is specifically configured to:
obtain the information about the candidate anchor UEs from the target UE; or
control the radio frequency unit 2101 to perform interaction with a network-side device to obtain the information about the candidate anchor UEs.

Optionally, that the processor 2110 obtains the information about the candidate anchor UEs from the target UE is specifically configured to:
control the radio frequency unit 2101 to send a first message to the target UE, where the first message is used to request to obtain the information about the candidate anchor UEs;
control the radio frequency unit 2101 to receive a second message sent by the target UE in response to the first message, where the second message includes a first list of the candidate anchor UEs; and
obtain the information about the candidate anchor UEs based on the first list in the second message.

Optionally, the processor 2110 is further configured to:
in a case that a sidelink unicast connection has not been established between the location server UE and the target UE, execute a discovery procedure for the target UE and/or a sidelink unicast connection establishment procedure with the target UE;
that the radio frequency unit 2110 sends a first message to the target UE is specifically configured to:
   in a case that a sidelink unicast connection has been successfully established between the location server UE and the target UE, send the first message to the target UE through the sidelink unicast connection between the location server UE and the target UE; and
   that the radio frequency unit 2101 receives a second message sent by the target UE in response to the first message is specifically configured to:
      in a case that a sidelink unicast connection has been successfully established between the location server UE and the target UE, receive the second message through the sidelink unicast connection between the location server UE and the target UE.

Optionally, the radio frequency unit 2101 is further configured to:
in a case that the processor 2110 has not successfully discovered the target UE and/or has not been successfully established the sidelink unicast connection between the location server UE and the target UE, send a location response message or a positioning failure message to a device that has sent a location request, where the location response message or the positioning failure message carries first indication information, and the first indication information is used to indicate that the target UE is not successfully discovered and/or the sidelink unicast connection is not successfully established between the location server UE and the target UE.

Optionally, the first message includes a target condition that the candidate anchor UEs need to meet, and the candidate anchor UEs in the first list meet the target condition.

The target condition includes at least one of the following:
having known location information;
being capable of obtaining location information;
being in a specific mobility state;
having a reference signal received power RSRP measurement result greater than a first preset threshold;
belonging to a specific UE type;
possessing a specific sidelink positioning capability;
being within a network coverage area;
being within a specific area;
being in a specific radio resource control RRC state;
having a PC5 port resource greater than a second preset threshold;
having established a sidelink unicast connection with the target UE; and
being in a specified UE list.

Optionally, that the processor 2110 determines to perform sidelink positioning for a target UE is specifically configured to:
control the radio frequency unit 2101 to receive a location request, where the location request is used to request positioning of the target UE; and
determine, in response to the location request, to perform sidelink positioning for the target UE.

Optionally, the location request is sent by the target UE, and the location request includes a first list of the candidate anchor UEs; and
that the processor 2110 obtains the information about the candidate anchor UEs from the target UE is specifically configured to:
obtain the information about the candidate anchor UEs based on the first list in the location request.

Optionally, the second message or the location request further includes first UE information of the candidate anchor UEs, where the first UE information includes at least one of the following:
UE identifier;
UE index;
RRC state;
identification information of a serving cell;
registered access and mobility management function AMF information;
sidelink positioning capability information;
sidelink positioning reference signal PRS transmitting configuration information;
sidelink resource configuration;
sidelink resource allocation mode;
resource scheduling type when the sidelink resource allocation mode is mode1;
geographical location information;
associated RSRP measurement result; and
mobility state.

Optionally, the processor 2110 is further configured to:
execute a discovery procedure and/or a sidelink unicast connection establishment procedure for each UE in the first list; and
that the processor 2110 determines at least one anchor UE to be used for participating in positioning from the candidate anchor UEs is specifically configured to:
   determine the at least one anchor UE to be used for participating in positioning from a first category of UEs in the first list, where the first category of UEs are UEs for which the location server UE has successfully performed discovery and/or established a sidelink unicast connection.

Optionally, before the radio frequency unit 2101 sends a first message to the target UE, the processor 2110 is further configured to:
execute a discovery procedure for candidate anchor UEs to obtain a second list of candidate anchor UEs; where
the candidate anchor UEs included in the second list are UEs successfully discovered by the location server UE, the first message includes the second list, and the candidate anchor UEs included in the first list are UEs successfully discovered by the target UE in the second list.

Optionally, the radio frequency unit 2101 performs interaction with the anchor UE, and is specifically configured to:
perform interaction with the anchor UE through the target UE; or
in a case that the location server UE has successfully established a sidelink unicast connection with the anchor UE, perform interaction with the anchor UE through the sidelink unicast connection between the location server UE and the anchor UE.

Optionally, that the radio frequency unit 2101 performs interaction with the anchor UE through the target UE includes at least one of the following:
sending a third message to the target UE, where the third message includes identification information or index of the anchor UE and a first container, and the first container includes a fourth message sent by the location server UE to the anchor UE; and
receiving a sixth message sent by the target UE, where the sixth message includes identification information or index of the anchor UE and a second container, and the second container includes a fifth message sent by the anchor UE to the location server UE.

Optionally, that the processor 2110 controls the radio frequency unit 2101 to perform interaction with a network-side device to obtain the information about the candidate anchor UEs is specifically configured to:
control the radio frequency unit 2101 to send a first request message to the network-side device, where the first request message is used to request to obtain the information about the candidate anchor UEs;
control the radio frequency unit 2101 to receive a seventh message sent by the network-side device in response to the first request message, where the seventh message includes a third list of the candidate anchor UEs; and
obtain the information about the candidate anchor UEs based on the third list in the seventh message.

Optionally, the first request message includes location information of the location server UE, and the candidate anchor UEs in the third list are determined based on the location information of the location server UE.

Optionally, the network-side device is a location management function LMF, and the first request message is a location service LCS message or a long term evolution positioning protocol LPP message; or
the network-side device is an access mobility management function AMF, and the first request message is a non-access stratum NAS message.

Optionally, the seventh message is one of an LPP message, an LCS message, a NAS message, and a dedicated RRC message.

Optionally, that the processor 2110 controls the radio frequency unit 2101 to perform interaction with a network-side device to obtain the information about the candidate anchor UEs is specifically configured to:
control the radio frequency unit 2101 to receive a system information message sent by the network-side device, where the system information message includes a third list of the candidate anchor UEs; and
obtain the information about the candidate anchor UEs based on the third list in the system information message.

Optionally, the information about the anchor UEs included in the system information message is encrypted information; and
that the processor 2110 obtains the information about the candidate anchor UEs based on the third list in the system information message is specifically configured to:
in a case that a predetermined key is stored in the location server UE, decrypt, using the predetermined key, the encrypted information in the system information message to obtain the third list; and
obtain the information about the candidate anchor UEs based on the third list.

Optionally, the seventh message or the system information message further includes second UE information of the candidate anchor UEs, where the second UE information includes at least one of the following:
UE identifier;
geographical location information;
sidelink positioning capability information;
identification information of a serving cell; and
sidelink PRS transmitting configuration information.

Optionally, the third list includes at least one UE of the following:
candidate anchor UEs in a serving cell corresponding to the location server UE; and
candidate anchor UEs in a neighboring cell of a serving cell corresponding to the location server UE.

When the terminal 2100 serves as a target UE, the radio frequency unit 2101 is configured to receive a first message sent by the location server UE, where the first message is used to request information about candidate anchor UEs;
the processor 2110 is configured to execute a discovery procedure for candidate anchor UEs to obtain a first list of candidate anchor UEs; and
the radio frequency unit 2101 is configured to send a second message to the location server UE, where the second message includes the first list.

Optionally, that the processor 2110 executes a discovery procedure for candidate anchor UEs to obtain a first list of candidate anchor UEs is specifically configured to:
control the radio frequency unit 2101 to broadcast a discovery request message, where the discovery request message is used to request discovery of candidate anchor UEs;
control the radio frequency unit 2101 to receive first response messages to the discovery request message, and obtain the information about the candidate anchor UEs based on UEs corresponding to the first response message received; and
obtain the first list based on the information about the candidate anchor UEs; or
control the radio frequency unit 2101 to receive announcement messages broadcast by UEs, where the announcement messages include parameter information of the UEs;
obtain the information about the candidate anchor UEs based on UEs corresponding to the announcement message received; and
obtain the first list based on the information about the candidate anchor UEs.

Optionally, the first message includes a target condition that the candidate anchor UEs need to meet; and
that the processor 2110 obtains the information about the candidate anchor UEs based on UEs corresponding to the first response message or announcement message received is specifically configured to:
determine information about UEs that meet the target condition among the UEs corresponding to the received first response message or announcement message as the information about the candidate anchor UEs.

Optionally, the first message includes a target condition that the candidate anchor UEs need to meet, and the discovery request message includes the target condition; and
that the processor 2110 controls the radio frequency unit 2101 to receive first response messages to the discovery request message, and obtain the information about the candidate anchor UEs based on UEs corresponding to the first response messages received is specifically configured to:
control the radio frequency unit 2101 to receive the first response messages sent by UEs that meet the target condition, and determine information about the UEs corresponding to the received first response messages as the information about the candidate anchor UEs.

Optionally, the target condition includes at least one of the following:
having known location information;
being capable of obtaining location information;
being in a specific mobility state;
having a reference signal received power RSRP measurement result greater than a first preset threshold;
belonging to a specific UE type;
possessing a specific sidelink positioning capability;
being within a network coverage area;
being within a specific area;
being in a specific radio resource control RRC state;
having a PC5 port resource greater than a second preset threshold;
having established a sidelink unicast connection with the target UE; and
being in a specified UE list.

Optionally, the radio frequency unit 2101 is further configured to:
send a location request to the location server UE, where the location request includes the first list.

Optionally, the second message or the location request further includes first UE information of the candidate anchor UEs, where the first UE information includes at least one of the following:
UE identifier;
UE index;
RRC state;
identification information of a serving cell;
registered access and mobility management function AMF information;
sidelink positioning capability information;
sidelink positioning reference signal PRS transmitting configuration information;
sidelink resource configuration;
sidelink resource allocation mode;
resource scheduling type when the sidelink resource allocation mode is mode1;
geographical location information;
associated RSRP measurement result; and
mobility state.

Optionally, the first message includes a second list, and candidate anchor UEs included in the second list are UE successfully discovered by the location server UE; and
that the processor 2110 executes a discovery procedure for candidate anchor UEs to obtain a first list of candidate anchor UEs is specifically configured to:
execute a discovery procedure for candidate anchor UEs for the UEs in the second list to obtain the first list of the candidate anchor UEs.

Optionally, the radio frequency unit 2101 is further configured to:
forward a message interacted between the location server UE and at least one anchor UE to be used for participating in positioning.

Optionally, that the radio frequency unit 2101 forwards a message interacted between the location server UE and the anchor UE is specifically configured to:
receive a third message sent by the location server UE, where the third message includes identification information or index of the anchor UE and a first container, and the first container includes a fourth message sent by the location server UE to the anchor UE; and
determine the anchor UE based on the identification information or index of the anchor UE, and send a ninth message to the anchor UE, where the ninth message includes a third container, and the third container includes the fourth message.

Optionally, that the radio frequency unit 2101 forwards a message interacted between the location server UE and the anchor UE is further configured to:
receive a tenth message sent by the anchor UE, where the tenth message includes a fourth container, and the fourth container includes a fifth message sent by the anchor UE to the location server UE; and
send a sixth message to the location server UE, where the sixth message includes identification information or index of the anchor UE and a second container, and the second container includes the fifth message.

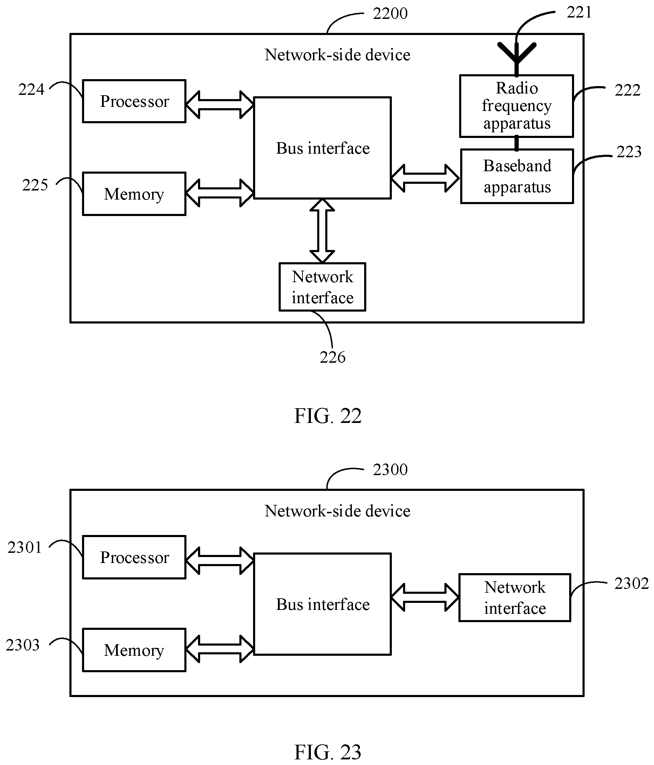

An embodiment of this application further provides a network-side device. As shown in FIG. 22, the network-side device 2200 includes: an antenna 221, a radio frequency apparatus 222, a baseband apparatus 223, a processor 224, and a memory 225. The antenna 221 is connected to the radio frequency apparatus 222. In an uplink direction, the radio frequency apparatus 222 receives information through the antenna 221, and sends the received information to the baseband apparatus 223 for processing. In a downlink direction, the baseband apparatus 223 processes to-be-sent information, and sends the information to the radio frequency apparatus 222; and the radio frequency apparatus 222 processes the received information and then sends the information using the antenna 221.

The method performed by the network-side device in the foregoing embodiment may be implemented in the baseband apparatus 223, and the baseband apparatus 223 includes a baseband processor.

The baseband apparatus 223 may include, for example, at least one baseband board, where a plurality of chips are disposed on the baseband board. As shown in FIG. 22, one of the chips is, for example, the baseband processor, and connected to the memory 225 through a bus interface, to invoke the program in the memory 225 to perform the operations of the network device shown in the foregoing method embodiment.

The network-side device may further include a network interface 226, where the interface is, for example, a common public radio interface (common public radio interface, CPRI).

Specifically, the network-side device 2200 in this embodiment of the present invention further includes a program or instructions stored in the memory 225 and capable of running on the processor 224. The processor 224 invokes the program or instructions in the memory 225 to execute the method shown in FIG. 10, with the same technical effect achieved. To avoid repetition, details are not described herein again.

Specifically, an embodiment of this application further provides a network-side device. As shown in FIG. 23, the network-side device 2300 includes a processor 2301, a network interface 2302, a memory 2303. The network interface 2302 may be, for example, a common public radio interface (common public radio interface, CPRI).

Specifically, the network-side device 2300 in this embodiment of the present invention further includes a program or instructions stored in the memory 2303 and capable of running on the processor 2301. The processor 2301 invokes the program or instructions in the memory 2303 to execute the method shown in FIG. 10, with the same technical effect achieved. To avoid repetition, details are not described herein again.

An embodiment of this application further provide a readable storage medium, where the readable storage medium stores a program or instructions, and when the program or instructions are executed by a processor, the processes of the foregoing positioning method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the positioning method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing positioning method embodiments, with the same technical effects achieved. To avoid repetition, the details are not repeated herein.

An embodiment of this application further provides a positioning system, where the positioning system includes a terminal and a network-side device, the terminal is capable of being configured to execute the steps of the positioning method according to the first aspect or the second aspect, and the network-side device is capable of being configured to execute the steps of the positioning method according to the third aspect.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a software product. The computer software product may be stored in a storage medium (for example, a ROM/RAM, a magnetic disk, or an optical disc), and includes several instructions for instructing a terminal device (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A positioning method, wherein the method comprises:
determining, by a location server UE, to perform sidelink positioning for a target UE;
obtaining, by the location server UE, information about candidate anchor UEs;
determining, by the location server UE, at least one anchor UE to be used for participating in positioning from the candidate anchor UEs; and
performing, by the location server UE, interaction with the target UE and/or the at least one anchor UE to position the target UE.

2. The method according to claim 1, wherein the obtaining, by the location server UE, information about candidate anchor UEs comprises:
obtaining, by the location server UE, the information about the candidate anchor UEs from the target UE; or
performing, by the location server UE, interaction with a network-side device to obtain the information about the candidate anchor UEs.

3. The method according to claim 2, wherein the obtaining, by the location server UE, the information about the candidate anchor UEs from the target UE comprises:
sending, by the location server UE, a first message to the target UE, wherein the first message is used to request to obtain the information about the candidate anchor UEs;
receiving, by the location server UE, a second message sent by the target UE in response to the first message, wherein the second message comprises a first list of the candidate anchor UEs; and
obtaining, by the location server UE, the information about the candidate anchor UEs based on the first list in the second message.

4. The method according to claim 3, wherein the method further comprises:
in a case that a sidelink unicast connection has not been established between the location server UE and the target UE, executing, by the location server UE, a discovery procedure for the target UE and/or a sidelink unicast connection establishment procedure with the target UE;
the sending, by the location server UE, a first message to the target UE comprises:
in a case that a sidelink unicast connection has been successfully established between the location server UE and the target UE, sending, by the location server UE, the first message to the target UE through the sidelink unicast connection between the location server UE and the target UE; and
the receiving, by the location server UE, a second message sent by the target UE in response to the first message comprises:
in a case that a sidelink unicast connection has been successfully established between the location server UE and the target UE, receiving, by the location server UE, the second message through the sidelink unicast connection between the location server UE and the target UE.

5. The method according to claim 4, wherein the method further comprises:
in a case that the target UE is not successfully discovered and/or the sidelink unicast connection has not been successfully established between the location server UE and the target UE, sending, by the location server UE, a location response message or a positioning failure message to a device that has sent a location request, wherein the location response message or the positioning failure message carries first indication information, and the first indication information is used to indicate that the target UE is not successfully discovered and/or the sidelink unicast connection is not successfully established between the location server UE and the target UE.

6. The method according to claim 3, wherein the first message comprises a target condition that the candidate anchor UEs need to meet, and the candidate anchor UEs in the first list meet the target condition; wherein
the target condition comprises at least one of the following:
having known location information;
being capable of obtaining location information;
being in a specific mobility state;
having a reference signal received power RSRP measurement result greater than a first preset threshold;
belonging to a specific UE type;
possessing a specific sidelink positioning capability;
being within a network coverage area;
being within a specific area;
being in a specific radio resource control RRC state;
having a PC5 port resource greater than a second preset threshold;
having established a sidelink unicast connection with the target UE; and
being in a specified UE list.

7. The method according to claim 2, wherein the determining, by a location server UE, to perform sidelink positioning for a target UE comprises:
receiving, by the location server UE, a location request, wherein the location request is used to request positioning of the target UE; and
determining, by the location server UE in response to the location request, to perform sidelink positioning for the target UE.

8. The method according to claim 7, wherein the location request is sent by the target UE, and the location request comprises a first list of the candidate anchor UEs; and
the obtaining, by the location server UE, the information about the candidate anchor UEs from the target UE comprises:
obtaining, by the location server UE, the information about the candidate anchor UEs based on the first list in the location request.

9. The method according to claim 3 or 8, wherein the second message or the location request further comprises first UE information of the candidate anchor UEs, wherein the first UE information comprises at least one of the following:
UE identifier;
UE index;
RRC state;
identification information of a serving cell;
registered access and mobility management function AMF information;
sidelink positioning capability information;
sidelink positioning reference signal PRS transmitting configuration information;
sidelink resource configuration;
sidelink resource allocation mode;
resource scheduling type when the sidelink resource allocation mode is mode1;
geographical location information;
associated RSRP measurement result; and
mobility state.

10. The method according to claim 3 or 8, wherein the method further comprises:
executing, by the location server UE, a discovery procedure and/or a sidelink unicast connection establishment procedure for each UE in the first list; and
the determining, by the location server UE, at least one anchor UE to be used for participating in positioning from the candidate anchor UEs comprises:
determining, by the location server UE, the at least one anchor UE to be used for participating in positioning from a first category of UEs in the first list, wherein the first category of UEs are UEs for which the location server UE has successfully performed discovery and/or established a sidelink unicast connection.

11. The method according to claim 3, wherein before the sending, by the location server UE, a first message to the target UE, the method further comprises:
executing, by the location server UE, a discovery procedure for candidate anchor UEs to obtain a second list of candidate anchor UEs; wherein
the candidate anchor UEs comprised in the second list are UEs successfully discovered by the location server UE, the first message comprises the second list, and the candidate anchor UEs comprised in the first list are UEs successfully discovered by the target UE in the second list.

12. The method according to claim 1, wherein the performing, by the location server UE, interaction with the anchor UE comprises:
performing, by the location server UE, interaction with the anchor UE through the target UE; or
in a case that the location server UE has successfully established a sidelink unicast connection with the anchor UE, performing, by the location server UE, interaction with the anchor UE through the sidelink unicast connection between the location server UE and the anchor UE.

13. The method according to claim 12, wherein the performing, by the location server UE, interaction with the anchor UE through the target UE comprises at least one of the following:
sending, by the location server UE, a third message to the target UE, wherein the third message comprises identification information or index of the anchor UE and a first container, and the first container comprises a fourth message sent by the location server UE to the anchor UE; and
receiving, by the location server UE, a sixth message sent by the target UE, wherein the sixth message comprises identification information or index of the anchor UE and a second container, and the second container comprises a fifth message sent by the anchor UE to the location server UE.

14. The method according to claim 2, wherein the performing, by the location server UE, interaction with a network-side device to obtain the information about the candidate anchor UEs comprises:
sending, by the location server UE, a first request message to the network-side device, wherein the first request message is used to request to obtain the information about the candidate anchor UEs;
receiving, by the location server UE, a seventh message sent by the network-side device in response to the first request message, wherein the seventh message comprises a third list of the candidate anchor UEs; and
obtaining, by the location server UE, the information about the candidate anchor UEs based on the third list in the seventh message.

15. The method according to claim 14, wherein the first request message comprises location information of the location server UE, and the candidate anchor UEs in the third list are determined based on the location information of the location server UE.

16. The method according to claim 14, wherein the network-side device is a location management function LMF, and the first request message is a location service LCS message or a long term evolution positioning protocol LPP message; or
the network-side device is an access mobility management function AMF, and the first request message is a non-access stratum NAS message.

17. The method according to claim 14, wherein the seventh message is one of an LPP message, an LCS message, a NAS message, and a dedicated RRC message.

18. The method according to claim 2, wherein the performing, by the location server UE, interaction with a network-side device to obtain the information about the candidate anchor UEs comprises:
receiving, by the location server UE, a system information message sent by the network-side device, wherein the system information message comprises a third list of the candidate anchor UEs; and
obtaining, by the location server UE, the information about the candidate anchor UEs based on the third list in the system information message.

19. The method according to claim 18, wherein the information about the anchor UEs comprised in the system information message is encrypted information; and
the obtaining, by the location server UE, the information about the candidate anchor UEs based on the third list in the system information message comprises:
in a case that a predetermined key is stored in the location server UE, decrypting, by the location server UE using the predetermined key, the encrypted information in the system information message to obtain the third list; and
obtaining, by the location server UE, the information about the candidate anchor UEs based on the third list.

20. The method according to claim 14 or 18, wherein the seventh message or the system information message further comprises second UE information of the candidate anchor UEs, wherein the second UE information comprises at least one of the following:
UE identifier;
geographical location information;
sidelink positioning capability information;
identification information of a serving cell; and
sidelink PRS transmitting configuration information.

21. The method according to claim 14 or 18, wherein the third list comprises at least one UE of the following:
candidate anchor UEs in a serving cell corresponding to the location server UE; and
candidate anchor UEs in a neighboring cell of a serving cell corresponding to the location server UE.

22. A positioning method, wherein the method comprises:
sending, by a target UE, a first message to a location server UE, where the first message is used to request information about candidate anchor UEs;
executing, by the target UE, a discovery procedure for candidate anchor UEs to obtain a first list of candidate anchor UEs; and
sending, by the target UE, a second message to the location server UE, wherein the second message comprises the first list.

23. The method according to claim 22, wherein the executing, by the target UE, a discovery procedure for candidate anchor UEs to obtain a first list of candidate anchor UEs comprises:
broadcasting, by the target UE, a discovery request message, wherein the discovery request message is used to request discovery of candidate anchor UEs;
receiving, by the target UE, first response messages to the discovery request message, and obtaining the information about the candidate anchor UEs based on UEs corresponding to the first response message received; and
obtaining, by the target UE, the first list based on the information about the candidate anchor UEs; or
receiving, by the target UE, announcement messages broadcast by UEs, wherein the announcement messages comprise parameter information of the UEs;
obtaining, by the target UE, the information about the candidate anchor UEs based on UEs corresponding to the announcement message received; and
obtaining, by the target UE, the first list based on the information about the candidate anchor UEs.

24. The method according to claim 23, wherein the first message comprises a target condition that the candidate anchor UEs need to meet; and
the obtaining, by the target UE, the information about the candidate anchor UEs based on UEs corresponding to the first response message or announcement message received comprises:
determining, by the target UE, information about UEs that meet the target condition among the UEs corresponding to the received first response message or announcement message as the information about the candidate anchor UEs.

25. The method according to claim 23, wherein the first message comprises a target condition that the candidate anchor UEs need to meet, and the discovery request message comprises the target condition; and
the receiving, by the target UE, first response messages to the discovery request message, and obtaining the information about the candidate anchor UEs based on UEs corresponding to the first response message received comprises:
receiving, by the target UE, the first response messages sent by UEs that meets the target condition, and determining information about the UEs corresponding to the received first response messages as the information about the candidate anchor UEs.

26. The method according to claim 24 or 25, wherein the target condition comprises at least one of the following:
having known location information;
being capable of obtaining location information;
being in a specific mobility state;
having a reference signal received power RSRP measurement result greater than a first preset threshold;
belonging to a specific UE type;
possessing a specific sidelink positioning capability;
being within a network coverage area;
being within a specific area;
being in a specific radio resource control RRC state;
having a PC5 port resource greater than a second preset threshold;
having established a sidelink unicast connection with the target UE; and
being in a specified UE list.

27. The method according to claim 22, wherein the method further comprises:
sending, by the target UE, a location request to the location server UE, wherein the location request comprises the first list.

28. The method according to claim 22 or 27, wherein the second message or the location request further comprises first UE information of the candidate anchor UEs, wherein the first UE information comprises at least one of the following:
UE identifier;
UE index;
RRC state;
identification information of a serving cell; and
registered access and mobility management function AMF information;
sidelink positioning capability information;
sidelink positioning reference signal PRS transmitting configuration information;
sidelink resource configuration;
sidelink resource allocation mode;
resource scheduling type when the sidelink resource allocation mode is mode1;
geographical location information;
associated RSRP measurement result; and
mobility state.

29. The method according to claim 22, wherein the first message comprises a second list, and candidate anchor UEs comprised in the second list are UE successfully discovered by the location server UE; and
the executing, by the target UE, a discovery procedure for candidate anchor UEs to obtain a first list of candidate anchor UEs comprises:
executing, by the target UE, a discovery procedure for candidate anchor UEs for the UEs in the second list to obtain the first list of the candidate anchor UEs.

30. The method according to claim 22, wherein the method further comprises:
forwarding, by the target UE, a message interacted between the location server UE and at least one anchor UE to be used for participating in positioning.

31. The method according to claim 30, wherein the forwarding, by the target UE, a message interacted between the location server UE and the anchor UE comprises:
receiving, by the target UE, a third message sent by the location server UE, wherein the third message comprises identification information or index of the anchor UE and a first container, and the first container comprises a fourth message sent by the location server UE to the anchor UE; and
determining, by the target UE, the anchor UE based on the identification information or index of the anchor UE, and sending a ninth message to the anchor UE, wherein the ninth message comprises a third container, and the third container comprises the fourth message.

32. The method according to claim 30 or 31, wherein the forwarding, by the target UE, a message interacted between the location server UE and the anchor UE comprises:
receiving, by the target UE, a tenth message sent by the anchor UE, wherein the tenth message comprises a fourth container, and the fourth container comprises a fifth message sent by the anchor UE to the location server UE; and
sending, by the target UE, a sixth message to the location server UE, wherein the sixth message comprises identification information or index of the anchor UE and a second container, and the second container comprises the fifth message.

33. A positioning method, wherein the method comprises:
performing, by a network-side device, interaction with a location server UE to provide the location server UE with information about candidate anchor UEs.

34. The method according to claim 33, wherein the performing, by a network-side device, interaction with a location server UE to provide the location server UE with information about candidate anchor UEs comprises:
receiving, by the network-side device, a first request message sent by the location server UE, wherein the first request message is used to request to obtain the candidate anchor UEs; and
sending, by the network-side device, a seventh message to the location server UE in response to the first request message, wherein the seventh message comprises a third list of the candidate anchor UEs.

35. The method according to claim 34, wherein the network-side device is a location management function LMF, and the first request message is a location service LCS message or a long term evolution positioning protocol LPP message; or
the network-side device is an access mobility management function AMF, and the first request message is a non-access stratum NAS message.

36. The method according to claim 34, wherein the seventh message is one of an LPP message, an LCS message, a NAS message, and a dedicated RRC message.

37. The method according to claim 33, wherein the performing, by a network-side device, interaction with a location server UE to provide the location server UE with information about candidate anchor UEs comprises:
sending, by the network-side device, a system information message, wherein the system information message comprises a third list of the candidate anchor UEs.

38. The method according to claim 37, wherein before the sending, by the network-side device, the system information message, the method further comprises:
encrypting, by the network-side device using a predetermined key, the information about the anchor UEs comprised in the system information message.

39. The method according to claim 34 or 37, wherein the seventh message or the system information message further comprises second UE information of the candidate anchor UEs, wherein the second UE information comprises at least one of the following:
UE identifier;
geographical location information;
sidelink positioning capability information;
identification information of a serving cell; and
sidelink positioning reference signal PRS transmitting configuration information.

40. The method according to claim 34 or 37, wherein the third list comprises at least one UE of the following:
candidate anchor UEs in a serving cell corresponding to the location server UE; and
candidate anchor UEs in a neighboring cell of a serving cell corresponding to the location server UE.

41. A positioning apparatus, wherein the apparatus comprises:
a first determining module, configured to determine to perform sidelink positioning for a target UE;
a first information obtaining module, configured to obtain information about candidate anchor UEs;
a second determining module, configured to determine at least one anchor UE to be used for participating in positioning from the candidate anchor UEs; and
a location interaction module, configured to perform interaction with the target UE and/or the at least one anchor UE to position the target UE.

42. A positioning apparatus, wherein the apparatus comprises:
a first receiving module, configured to receive a first message sent by a location server UE, where the first message is used to request information about candidate anchor UEs;
a first discovery module, configured to execute a discovery procedure for candidate anchor UEs to obtain a first list of candidate anchor UEs; and
a first sending module, configured to send a second message to the location server UE, where the second message comprises the first list.

43. A positioning apparatus, wherein the apparatus comprises:
an information providing module, configured to perform interaction with a location server UE to provide the location server UE with information about candidate anchor UEs.

44. A terminal, comprising a processor and a memory, wherein the memory stores a program or instructions capable of running on the processor, and when the program or the instructions are executed by the processor, the steps of the positioning method according to any one of claims 1 to 21 are implemented, or the steps of the positioning method according to any one of claims 22 to 32 are implemented.

45. A network-side device, comprising a processor and a memory, wherein the memory stores a program or instructions capable of running on the processor, and when the program or the instructions are executed by the processor, the steps of the positioning method according to any one of claims 33 to 40 are implemented.

46. A readable storage medium, wherein the readable storage medium stores a program or instructions, and when the program or instructions are executed by a processor, the steps of the positioning method according to any one of claims 1 to 21 or the steps of the positioning method according to any one of claims 22 to 32 or the step of the positioning method according to any one of claims 33 to 40 are implemented.
